# EUROPÄISCHE PATENTSCHRIFT

(11) **EP 3 319 847 B1**
(45) Veröffentlichungstag und Bekanntmachung des Hinweises auf die Patenterteilung: **07.08.2019**
(21) Anmeldenummer: 16731903.7
(22) Anmeldetag: 23.06.2016
(51) Int. Cl.: B60S 3/06, A46B 13/00, A46B 7/06

(54) **WASCHVORRICHTUNG FÜR EINE FAHRZEUGWASCHANLAGE UND FAHRZEUGWASCHANLAGE**
WASHING DEVICE FOR A VEHICLE WASHING SYSTEM, AND VEHICLE WASHING SYSTEM
DISPOSITIF DE LAVAGE POUR INSTALLATION DE LAVAGE DE VÉHICULE ET INSTALLATION DE LAVAGE DE VÉHICULE

(30) Priorität: 08.07.2015 DE 102015111042
(43) Veröffentlichungstag der Anmeldung: 16.05.2018
(73) Patentinhaber: Alfred Kärcher SE & Co. KG, 71364 Winnenden (DE)
(72) Erfinder: HABERL, Bernd, 71554 Weissach im Tal (DE)
(74) Vertreter: Hoeger, Stellrecht & Partner Patentanwälte mbB
(86) Internationale Anmeldenummer: PCT/EP2016/064622
(87) Internationale Veröffentlichungsnummer: WO 2017/005506

(56) Entgegenhaltungen:
- DE-A1-102006 017 999

## Beschreibung

Die Erfindung betrifft eine Waschvorrichtung für eine Fahrzeugwaschanlage, welche Waschvorrichtung eine um eine Drehachse drehend antreibbare Welle sowie mit dieser in Wirkverbindung stehende Waschelemente zum Waschen eines Fahrzeugs umfasst.

Außerdem betrifft die Erfindung eine Fahrzeugwaschanlage, besonders für Kraftfahrzeuge, mit mindestens einer Waschvorrichtung.

Eine Waschvorrichtung der eingangs genannten Art kommt bei einer Fahrzeugwaschanlage zum Einsatz, bei der es sich um eine Portalwaschanlage oder um eine Waschstraße handeln kann. Die Waschvorrichtung kann als Seitenwaschvorrichtung zum Reinigen seitlicher Fahrzeugbereiche oder als "Dach"-waschvorrichtung zum Einsatz kommen, mit der an einer Oberseite liegende Fahrzeugbereiche und insbesondere das Dach gereinigt werden können.

In der Praxis besteht das Problem, dass Fahrzeuge unterschiedliche Konturen aufweisen können und eine Reinigung derselben Güte von Fahrzeugen unterschiedlicher Konturen schwer fällt. Beispielsweise weisen Sportwagen eine flache, zur Seite oftmals stark konvexe Kontur auf, Limousinen eine mittelhohe, trapezförmige Kontur und Großraumlimousinen und Kleinbusse eine eher rechteckförmige Kontur. Zur Anpassung der Waschvorrichtung an die Kontur des Fahrzeugs schlägt die EP 0 012 683 A1 vor, die Welle mit einem Gelenk auszustatten, so dass zwei im Winkel zueinander ausgerichtete Abschnitte der Welle vorhanden sind. Nachteilig ist es jedoch, dass im Bereich des Gelenkes Waschelemente ausgespart sind und das Fahrzeug an dieser Stelle nur unzureichend gereinigt wird. Zudem ist es erforderlich, zur Bereitstellung und Aufrechterhaltung der Abwinklung die Welle beidseitig zu lagern, was einen beträchtlichen Material- und Herstellungsaufwand erfordert.

Eine weitere Waschvorrichtung mit abwinkelbarer Welle ist in der EP 0 808 753 A1 beschrieben. Die Waschvorrichtung weist eine Hohlwelle auf, die auf einer im Inneren angeordneten Seele drehbar gelagert ist. Die Seele kann an einem Gelenk abgewinkelt werden. Unterschiedliche Segmente der Hohlwelle sind über stirnseitige Verzahnungen gekoppelt. Die in der EP 0 808 753 A1 beschriebene Waschvorrichtung weist den Nachteil einer komplexen, herstellungstechnisch aufwendigen Konstruktion auf. Zudem ist eine Anpassung der Waschvorrichtung an die Fahrzeugkontur nur eingeschränkt möglich.

Die DE 10 2006 017 999 A1 beschreibt eine Waschvorrichtung mit Konturanpassung an das Fahrzeug. In dieser Druckschrift wird vorgeschlagen, dass die Waschelemente im drehenden Zustand der Welle über ihre freien Enden eine konkave Kontur ausbilden, die näherungsweise der konvexen Kontur von Fahrzeugen entspricht. Diese Waschvorrichtung ist mit hohen Herstellungskosten verbunden, da für unterschiedliche axiale Abschnitte längs der Drehachse unterschiedliche Waschelemente vorgehalten und montiert werden müssen.

In der WO 2007/072524 A1 ist ein auf Formschluss basierender Befestigungsmechanismus für Waschelemente an der Welle beschrieben.

Aufgabe der vorliegenden Erfindung ist es, eine Waschvorrichtung der eingangs genannten Art sowie eine Fahrzeugwaschanlage bereitzustellen, wobei mit der Waschvorrichtung eine Anpassung an die Kontur eines Fahrzeugs ermöglicht wird, um eine bessere Reinigung desselben zu erzielen.

Diese Aufgabe wird bei einer gattungsgemäßen Waschvorrichtung erfindungsgemäß dadurch gelöst, dass die Waschvorrichtung eine Waschelementhalteeinrichtung umfasst, die mit der Welle gekoppelt ist und Waschelementhalteteile aufweist, an denen die Waschelemente mit ihren festen Enden gehalten sind, und dass die Waschelementhalteteile relativ zur Welle beweglich ausgebildet sind und bei Kraftbeaufschlagung in Richtung auf die Welle im angetriebenen Zustand der Welle relativ zu dieser bewegt werden zum Verringern des Abstandes der festen Enden der Waschelemente von der Welle, wobei die Waschelementhalteteile längserstreckt ausgestaltet sind und zwei oder mehr Waschelementhalteteile radial außenseitig an der Welle oder an mindestens einem mit dieser drehfest verbundenen Lagerkörper um eine Schwenkachse quer und insbesondere senkrecht zur Drehachse schwenkbar gelagert und die Welle in Umfangsrichtung umgebend angeordnet sind.

Bei der erfindungsgemäßen Waschvorrichtung sind die Waschelemente an Waschelementhalteteilen der Waschelementhalteeinrichtung festgelegt. Die Waschelementhalteeinrichtung kann aufgrund der Kopplung mit der Welle von dieser in Drehung versetzt werden. Die Waschelementhalteteile sind, zumindest abschnittsweise, beweglich relativ zur Welle ausgestaltet. Werden die Waschelementhalteteile bei drehender Welle mit einer in Richtung auf die Welle gerichteten Kraft beaufschlagt, können sie sich relativ zur Welle bewegen. Dadurch wird der Abstand der festen Enden der Waschelementhalteteile von der Welle verringert. Ein Umfang der Waschvorrichtung, definiert über die Waschelemente im drehenden Zustand der Welle, kann auf diese Weise im Bereich der sich relativ zur Welle bewegenden Waschelementhalteteile verringert werden. Die Kraftbeaufschlagung wird hervorgerufen durch eine Gegenkraft, die das zu reinigende Fahrzeug der Anlage- oder Kontaktkraft der Waschvorrichtung entgegensetzt. Die Gegenkraft ist abhängig von der Kontur des Fahrzeugs, wodurch eine Anpassung der Waschvorrichtung an die Kontur ermöglicht wird.

Bei der erfindungsgemäßen Waschvorrichtung ist insbesondere die Möglichkeit gegeben, die Welle herstellungstechnisch einfach und kostengünstig geradlinig erstreckt auszugestalten, anders als bei den Waschvorrichtungen gemäß der EP 0 012 683 A1 und der EP 0 808 753 A1. Im Gegensatz zur DE 10 2006 017 999 A1 ist es nicht erforderlich, einen axial uneinheitlichen Besatz von Waschelementen vorzusehen. Stattdessen können einheitliche, identische Waschelemente eingesetzt und die Waschvorrichtung konstruktiv einfach aufgebaut werden.

Von Vorteil ist es, wenn die Waschelementhalteeinrichtung so ausgebildet ist und die Waschelementhalteteile so relativ zur Welle beweglich sind, dass der Abstand der festen Enden der Waschelemente von der Welle abhängig von deren Position (der Waschelemente) axial bezüglich der Drehachse in unterschiedlichem Ausmaß veränderbar ist. Je nachdem, welche Position die Waschelemente axial bezüglich der Drehachse einnehmen, können sie bei Kraftbeaufschlagung in unterschiedlichen Abstand zur Welle gebracht werden, um eine Anpassung an die Kontur des Fahrzeugs zu verbessern. Es kann vorgesehen sein, dass die Waschelemente axial abschnittsweise in denselben Abstand zur Welle bringbar sind. Möglich ist auch, dass der Abstand, den die Waschelemente relativ zur Welle einnehmen können, axial kontinuierlich und insbesondere stetig variiert.

Günstig ist es, wenn die Waschelementhalteeinrichtung axial in zwei oder mehr Waschelementhalteeinheiten mit jeweils mindestens einem Waschelementhalteteil unterteilt ist, wobei das mindestens eine Waschelementhalteteil einer Waschelementhalteeinheit unabhängig vom mindestens einen Waschelementhalteteil einer anderen Waschelementhalteeinheit relativ zur Welle beweglich ist. Über die zwei oder mehr Waschelementhalteeinheiten mit jeweils mindestens einem Waschelementhalteteil ist es möglich, dass abhängig von der Position der Waschelemente axial unterschiedliche Abstände der festen Enden der Waschelemente bereitgestellt werden können. Die Anpassung an die Kontur des Fahrzeugs kann auf diese Weise verbessert werden. Insbesondere ist eine segmentweise Anpassung an die Fahrzeugkontur möglich, wobei die Waschelementhalteeinheiten die Waschelementhalteeinrichtung axial in einzelne Segmente unterteilt.

Es kann vorgesehen sein, dass die Waschelementhalteteile an der Welle verschieblich, vorzugsweise in einer Ebene quer und insbesondere senkrecht zur Drehachse, und/oder schwenkbar, bevorzugt um eine Schwenkachse parallel zur Drehachse oder quer und insbesondere senkrecht zu dieser gelagert sind.

Speziell bei der zuletzt erwähnten vorteilhaften Ausführungsform ist es günstig, wenn die Waschelementhalteteile durch Drehung der Welle betätigbar oder fliehkraftbetätigbar sind und unter Drehung der Welle verschoben und/oder verschwenkt werden. Bei Einwirken der Gegenkraft infolge des Fahrzeugs können die Waschelementhalteteile in entgegengesetzter Richtung verschoben und/oder verschwenkt werden.

Möglich ist es, dass eine Rückstelleinrichtung vorgesehen ist, insbesondere bei der zu vorletzt beschriebenen vorteilhaften Ausführungsform, entgegen deren Wirkung die Waschelementhalteteile verschoben und/oder verschwenkt werden. Die Rückstelleinrichtung ist beispielsweise mechanisch, magnetisch oder elektromagnetisch ausgebildet.

Es kann ferner vorgesehen sein, dass die Waschelementhalteteile längenveränderlich ausgestaltet sind, so dass bei Einwirken der Gegenkraft durch das Fahrzeug eine Verkürzung der Waschelementhalteteile erfolgt und die festen Enden in Richtung auf die Welle bewegt werden. Fliehkraftbetätigt können die Waschelementhalteteile in entgegengesetzter Richtung verlängert werden.

Alternativ oder ergänzend kann vorgesehen sein, dass die Waschelementhalteteile flexibel ausgestaltet sind. Durch eine vorzugsweise elastische Verformung der Waschelementhalteteile kann die Waschvorrichtung dadurch konstruktiv einfach an unterschiedliche Fahrzeugkonturen angepasst werden.

Bei einer vorteilhaften Ausführungsform der Waschvorrichtung erweist es sich als günstig, wenn die Waschelementhalteeinrichtung mindestens einen Grundkörper aufweist, der an der Welle über einen ersten Abschnitt radial innenseitig drehfest gehalten ist und der radial außenseitig einen zweiten Abschnitt aufweist, an dem die Waschelemente angeordnet sind. Der mindestens eine Grundkörper ist über den ersten Abschnitt beispielsweise kraft- und/oder formschlüssig an der Welle gehalten und auf diese Weise drehfest mit dieser gekoppelt. Radial außenseitig am zweiten Abschnitt sind Waschelemente angeordnet.

Beispielsweise kann vorgesehen sein, dass am zweiten Abschnitt eine Mehrzahl von Waschelementhalteteilen in Umfangsrichtung des Grundkörpers angeordnet ist. Die Waschelementhalteteile sind vorzugsweise gleichmäßig voneinander beabstandet am Umfang des zweiten Abschnittes angeordnet.

Von Vorteil ist es, wenn die Waschelementhalteteile am Grundkörper verschieblich, vorzugsweise in einer Ebene quer und insbesondere senkrecht zur Drehachse, und/oder schwenkbar, bevorzugt um eine Schwenkachse parallel zur Drehachse oder quer und insbesondere senkrecht zu dieser gelagert sind. Beispielsweise werden die Waschelementhalteteile relativ zum Grundkörper fliehkraftbetätigt verschoben und/oder verschwenkt. Bei Auftreten der Gegenkraft des Fahrzeuges können die Waschelementhalteteile unter Verringerung des Abstandes der festen Enden in der Gegenrichtung verschoben und/oder verschwenkt werden.

Die Waschelementhalteteile sind günstigerweise unter Drehung der Welle relativ zum Grundkörper entgegen der Wirkung einer Rückstelleinrichtung in eine Arbeitsstellung überführbar und nehmen bei nicht drehender Welle durch die Rückstelleinrichtung eine Grundstellung ein, in der die festen Enden weniger weit vom Grundkörper beabstandet sind als in der Arbeitsstellung. Die Rückstelleinrichtung ist beispielsweise mechanisch, magnetisch oder elektromagnetisch ausgestaltet.

Schwenkbar am Grundkörper gelagerte Waschelementhalteteile sind zum Beispiel klappenförmig ausgestaltet und um Achsen parallel zur Drehachse schwenkbar. In einer Grundstellung bei nicht angetriebener Welle können sie beispielsweise an der Welle anliegen. In einer Arbeitsstellung können die Klappen unter Vergrößerung des Abstandes der festen Enden von der Welle verschwenken.

Verschiebbare Waschelementhalteteile sind beispielsweise speichenförmig ausgestaltet und radial bezüglich der Drehachse von einer Grundstellung in eine Arbeitsstellung und umgekehrt relativ zur Welle verschiebbar.

Es kann vorgesehen sein, dass der erste Abschnitt und der zweite Abschnitt starr miteinander verbunden sind. Insbesondere kann der mindestens eine Grundkörper insgesamt starr ausgestaltet sein. Beispielsweise sind die Abschnitte einstückig miteinander verbunden.

Als günstig erweist es sich, wenn der zweite Abschnitt des Grundkörpers ein Waschelementhalteteil ausbildet, an dem Waschelemente festgelegt sind. Ergänzend ist denkbar, dass Waschelementhalteteile, wie vorstehend erläutert, am Grundkörper verschiebbar und/oder schwenkbar gelagert sind.

Beispielsweise sind die Waschelemente an einem Außenumfang, gebildet durch den zweiten Abschnitt, am Grundkörper festgelegt.

Bei einer vorteilhaften Umsetzung der Waschvorrichtung ist es von Vorteil, wenn der zweite Abschnitt relativ zum ersten Abschnitt beweglich ausgebildet ist. Der zweite Abschnitt kann oder kann nicht relativ zum ersten Abschnitt beweglich gelagert sein.

Insbesondere ist der zweite Abschnitt vorteilhafterweise relativ zum ersten Abschnitt verschieblich in einer Ebene quer und insbesondere senkrecht zur Drehachse in zumindest einer Raumrichtung. Bei Kraftbeaufschlagung durch die Gegenkraft des Fahrzeuges kann der zweite Abschnitt relativ zum ersten Abschnitt quer zur Drehachse bewegt und dadurch der Abstand der festen Enden der Waschelementhalteteile von der Welle verringert werden.

Als günstig erweist es sich, wenn der zweite Abschnitt relativ zum ersten Abschnitt in einer Ebene quer und insbesondere senkrecht zur Drehachse entgegen der Wirkung mindestens eines elastischen Elementes schwimmend gelagert ist. Durch die schwimmende Lagerung wird eine besonders wirkungsvolle Anpassung der Waschvorrichtung an die Kontur des Fahrzeugs ermöglicht. Abhängig von der Gegenkraft des Fahrzeuges kann der zweite Abschnitt relativ zur Welle eine exzentrische Stellung einnehmen. Die Exzentrizität kann umso größer sein, je weiter die Kontur des Fahrzeugs in Richtung der Waschvorrichtung hervorragt.

Das mindestens eine elastische Element ist vorzugsweise eine den ersten Abschnitt und den zweiten Abschnitt miteinander verbindende Feder. Beispielweise ist mindestens eine Schraubenfeder vorgesehen oder mindestens ein Federsteg. Günstigerweise sind zwei oder mehr in Umfangsrichtung der Welle vorzugsweise äquidistant angeordnete Federn vorhanden.

Bei einer andersartigen Ausführungsform der Waschvorrichtung ist es günstig, wenn das mindestens eine elastische Element ein den ersten Abschnitt und den zweiten Abschnitt miteinander verbindendes elastisch verformbares Material ist oder umfasst, beispielsweise ein Schaumstoffmaterial oder ein Gummimaterial.

In einer Grundstellung bei nicht angetriebener Welle oder drehend angetriebener Welle ohne Einwirken einer Gegenkraft durch das Fahrzeug nimmt der zweite Abschnitt vorzugsweise eine konzentrische Ausrichtung relativ zur Drehachse ein.

Der mindestens eine Grundkörper weist bevorzugt eine zylindrische Gestalt auf. In axialer Blickrichtung ist die Kontur des mindestens einen Grundkörpers sowie gegebenenfalls daran gehaltener Waschelementhalteteile vorzugsweise ringförmig.

Die Waschelementhalteeinrichtung umfasst bevorzugt eine Mehrzahl von axial nebeneinander angeordneten, an der Welle festgelegten Grundkörpern. Dies gibt insbesondere die Möglichkeit, dass die festen Enden der Waschelemente abhängig von deren axialer Position unabhängig voneinander in unterschiedlichen Abstand zur Welle bringbar sind. Beispielsweise bildet ein jeweiliger Grundkörper zusammen mit gegebenenfalls daran gehaltenen Waschelementhalteteilen eine der vorstehend erwähnten Waschelementhalteeinheiten.

Von Vorteil ist es, wenn das mindestens eine Waschelementhalteteil eines Grundkörpers unabhängig vom mindestens einen Waschelementhalteteil eines jeweiligen anderen Grundkörpers relativ zur Welle bewegbar ist. Waschelementhalteteile, die an unterschiedlichen Grundkörpern gehalten oder von diesen gebildet sind, können auf diese Weise voneinander entkoppelt sein. Dies ermöglicht eine segmentweise Anpassung der Kontur der Waschvorrichtung an die Fahrzeugkontur.

Bei einer andersartigen vorteilhaften Ausführungsform der Waschvorrichtung ist es günstig, wenn die Welle als Hohlwelle ausgestaltet ist und wenn die Waschelementhalteeinrichtung mindestens einen Haltekörper im von der Hohlwelle umschlossenen Raum aufweist, wobei die Waschelementhalteteile am Haltekörper festgelegt sind und Durchgangsöffnungen in der Welle durchgreifen. Die Waschelementhalteteile sind bei einer derartigen Ausführungsform beispielsweise längenveränderlich ausgestaltet, flexibel, verschiebbar und/oder drehbar am Haltekörper gelagert und an diesem insbesondere exzentrisch zur Drehachse gehalten.

Ränder der Durchgangsöffnungen bilden vorzugsweise Mitnehmeranschläge für die Waschelementhalteteile, um diese bei drehender Welle in Rotation zu versetzen. Bei Rotation der Welle können die Ränder die Waschelementhalteteile kontaktieren und in Drehung versetzen.

Als günstig erweist es sich, wenn die Waschvorrichtung ein im Raum angeordnetes Verstellelement aufweist zum axialen Verschieben des mindestens einen Haltekörpers relativ zur Welle oder zum Drehen des mindestens einen Haltekörpers um die Drehachse relativ zur Welle. Dies gibt die Möglichkeit, die Relativanordnung des Haltekörpers zur Welle durch Drehung oder Verschieben zu verändern.

Vorteilhafterweise ist der mindestens eine Haltekörper durch Einwirken auf das Verstellelement von einer Grundstellung in mindestens eine Arbeitsstellung überführbar, in der der Abstand der festen Enden der Waschelementhalteteile von der Welle größer ist als in der Grundstellung. Durch das Verstellelement wird beispielsweise bei Inbetriebnahme der Waschvorrichtung der Abstand der festen Enden von der Welle vergrößert. Durch Kraftbeaufschlagung wie eingangs erläutert kann der Abstand der festen Enden von der Welle in deren angetriebenem Zustand verringert werden.

Über das Verstellelement ist insbesondere auch die Möglichkeit gegeben, je nach Ausmaß der Verschiebung oder der Drehung des Haltekörpers die Größe der Waschvorrichtung zu verändern. Insoweit kann über das Verstellelement eine Zwangsverstellung der Waschelemente zur Größenanpassung der Waschvorrichtung ermöglicht werden.

Vorteilhafterweise ist eine Mehrzahl von axial nebeneinander angeordneten Haltekörpern mit daran gehaltenen Waschelementhalteteilen vorgesehen.

Günstigerweise sind zwei oder mehr Haltekörper mit einem Verstellelement von einer jeweiligen Grundstellung in die mindestens eine jeweilige Arbeitsstellung überführbar.

Bei der erfindungsgemäßen Waschvorrichtung ist es günstig, dass die Waschelementhalteteile längserstreckt ausgestaltet sind und zwei oder mehr Waschelementhalteteile radial außenseitig an der Welle oder an mindestens einem mit dieser drehfest verbundenen Lagerkörper um eine Schwenkachse quer und insbesondere senkrecht zur Drehachse schwenkbar gelagert und die Welle in Umfangsrichtung umgebend angeordnet sind. Ein jeweiliges Waschelementhalteteil ist um eine Schwenkachse quer und insbesondere senkrecht zur Drehachse schwenkbar gelagert. Durch Verschwenken des Waschelementhalteteils können die an diesem festgelegten Waschelemente mit ihren festen Enden in unterschiedlichen Abstand zur Welle gebracht werden. Die Waschvorrichtung kann im drehenden Zustand dadurch eine ungefähr schirmförmige, kegelförmige oder kegelstumpfförmige Gestalt aufweisen. Abhängig von der Gegenkraft des Fahrzeuges wird ein jeweiliges Waschelementhalteteil relativ zur Welle verschwenkt. Die Öffnungsweite des "Schirms", "Kegels" oder "Kegelstumpfes" kann dadurch zur Anpassung der Waschvorrichtung an die Fahrzeugkontur variiert werden.

Die längserstreckten Waschelementhalteteile sind in Umfangsrichtung der Welle bevorzugt äquidistant zueinander angeordnet und/oder identisch ausgestaltet, ebenso wie die gegebenenfalls vorhandenen Lagerkörper.

Als vorteilhaft erweist es sich, wenn die Waschelementhalteteile als Schienen oder Leisten ausgestaltet sind und der oder die Lagerkörper Führungen ausbilden oder umfassen, in denen die Schienen beim Verschwenken geführt sind. Die Führungen können auch der Stabilisierung der Waschelementhalteteile dienen, die bei Drehung der Welle nicht unerheblichen Kräften ausgesetzt sind.

Eine typische Drehrate der Waschvorrichtung beträgt beispielsweise ungefähr 100 Umdrehungen pro Minute.

Als günstig erweist es sich, wenn die Waschelementhalteeinrichtung mindestens ein elastisches Element umfasst, das an den Waschelementhalteteilen im Abstand zur jeweiligen Schwenkachse angreift und entgegen dessen Wirkung die Waschelementhalteteile um die Schwenkachse schwenkbar sind. Das mindestens eine elastische Element kann auf Zug wirksam sein, so dass ein jeweiliges Waschelementhalteteil entgegen der Wirkung von der Welle weg verschwenkt wird. Alternativ kann vorgesehen sein, dass das mindestens eine elastische Element auf Druck wirksam ist. Ein jeweiliges Waschelementhalteteil kann unter der Wirkung des elastischen Elementes weg von der Welle verschwenkt werden.

Bei einer vorteilhaften Ausführungsform ist vorgesehen, dass das mindestens eine elastische Element ein elastisch aufweitbarer Ring ist, der die Waschelementhalteteile in Umfangsrichtung der Welle miteinander verbindet. Der Ring, beispielsweise ein Gummiring, ist auf Zug in Richtung der Welle wirksam. Werden die Waschelementhalteteile an einer bezüglich der Schwenkachsen gegenüberliegenden Seite des Ringes durch eine auf die Welle gerichtete Kraft verschwenkt, wird der auf der bezüglich der Schwenkachsen anderen Seite liegende Ring aufgeweitet. Über den Ring können die Waschelementhalteteile wieder in die Ausgangsstellung verschwenkt werden.

Das mindestens eine elastische Element ist vorzugsweise endseitig oder im Bereich eines Endabschnittes eines jeweiligen Waschelementhalteteiles angeordnet.

Günstigerweise ist die jeweilige Schwenkachse zwischen ersten Enden und zweiten Enden der Waschelementhalteteile angeordnet, und zu beiden Seiten der jeweiligen Schwenkachse ist jeweils mindestens ein elastisches Element angeordnet. Beispielsweise ist zu beiden Seiten der jeweiligen Schwenkachse ein die Waschelemente miteinander verbindender elastisch aufweitbarer Ring vorgesehen.

Die längserstreckten Waschelementhalteteile sind insbesondere nach Art einer "Wippe" am Lagerkörper oder an der Welle um die jeweilige Schwenkachse schwenkbar gelagert. Wird das Waschelementhalteteil auf einer Seite der Schwenkachse mit einer in Richtung auf die Welle gerichteten Kraft beaufschlagt, kann dadurch der Abstand der festen Enden der Waschelemente in diesem Bereich von der Welle verringert werden. Auf der der Schwenkachse gegenüberliegenden Seite des Waschelementhalteteils wird der Abstand der festen Enden der Waschelemente von der Welle vergrößert. Es zeigt sich, dass dadurch bei zugleich konstruktiv einfacher Ausgestaltung eine vielseitig anpassbare Waschvorrichtung bereitgestellt werden kann.

Bei einer andersartigen vorteilhaften Ausführungsform der Waschvorrichtung ist es günstig, wenn die Waschelementhalteeinrichtung Koppelglieder umfasst, die ein jeweiliges Waschelementhalteteil im Abstand zur Schwenkachse mit der Welle koppeln, wobei das Koppelglied am Waschelementhalteteil angelenkt und schwenkbar mit einem an der Welle axial verschieblich gehaltenen Halteglied verbunden ist. Bei Kraftbeaufschlagung kann das Waschelementhalteteil relativ zur Welle verschwenkt werden. Gleichzeitig wird es relativ zum Koppelglied unter Verschiebung des Haltegliedes in axialer Richtung verschwenkt. Der Abstand der festen Enden der Waschelemente von der Welle kann dadurch verändert werden. In einer Grundstellung der Waschvorrichtung kann zum Beispiel vorgesehen sein, dass das jeweilige Waschelementhalteteil mit dem entsprechenden Koppelglied in axialer Richtung fluchtet oder im Wesentlichen fluchtet. Bei Drehung der Welle erfolgt fliehkraftbetätigt ein Verschieben des Haltegliedes in axialer Richtung unter gleichzeitigem Verschwenken des Waschelementhalteteiles.

Das mindestens eine Koppelglied kann federnd ausgestaltet sein.

Günstigerweise ist ein gemeinsames Halteglied vorgesehen, mit dem die Koppelglieder von zwei oder mehr Waschelementhalteteilen verbunden sind. Das Halteglied ist zum Beispiel ringförmig ausgestaltet und konzentrisch zur Welle ausgerichtet.

Dem mindestens einen Halteglied kann mindestens ein Anschlag zugeordnet sein zum Begrenzen des axialen Verschiebeweges.

Günstig ist es, wenn die Waschelementhalteeinrichtung eine erste Gruppe von Waschelementhalteteilen und axial daneben angeordnet eine zweite Gruppe von Waschelementhalteteilen umfasst, wobei die Waschelementhalteteile der ersten Gruppe und der zweiten Gruppe an einander abgewandten Seiten mit den Koppelgliedern verbunden sind und an einander zugewandten Seiten an der Welle oder dem mindestens einen Lagerkörper schwenkbar gelagert sind. Darunter kann vorliegend insbesondere verstanden werden, dass die Waschelementhalteteile der ersten Gruppe an einer den Waschelementhalteteilen der zweiten Gruppe zugewandten Seite schwenkbar gelagert sind und an einer den Waschelementhalteteilen der zweiten Gruppe abgewandten Seite mit den Koppelgliedern verbunden sind. Entsprechendes gilt für die Waschelementhalteteile der zweiten Gruppe. Den Waschelementhalteteilen der ersten Gruppe ist mindestens ein axial verschiebliches Halteglied zugeordnet, und den Waschelementhalteteilen der zweiten Gruppe ebenfalls mindestens ein axial verschiebliches Halteglied. Die erste Gruppe von Waschelementhalteteilen bildet zusammen mit den Koppelgliedern und dem mindestens einen Halteglied insbesondere eine der vorstehend erwähnten Waschelementhalteeinheiten. Entsprechendes gilt für die Waschelementhalteteile der zweiten Gruppe zusammen mit den Koppelgliedern und dem mindestens einen Halteglied. Die Waschelementhalteteile jeder Gruppe können unabhängig von den Waschelementhalteteilen der jeweils anderen Gruppe relativ zur Welle verschwenkt werden, um eine bessere Anpassung der Kontur der Waschvorrichtung an die Fahrzeugkontur zu ermöglichen.

Insbesondere kann vorgesehen sein, dass je ein Waschelementhalteteil der ersten und der zweiten Gruppe an einem gemeinsamen Gelenk um eine gemeinsame Schwenkachse verschwenkbar sind.

Ein jeweiliges Koppelglied ist bevorzugt endseitig oder im Bereich eines Endabschnittes an ein jeweiliges Waschelementhalteteil angelenkt.

Die längserstreckt ausgestalteten Waschelementhalteteile sind bei nicht angetriebener Welle vorzugsweise parallel zur Welle ausgerichtet.

Bei einer andersartigen vorteilhaften Ausführungsform der Waschvorrichtung ist es günstig, wenn die Waschelementhalteeinrichtung zwei axial im Abstand zueinander an der Welle gehaltene Halteglieder aufweist, von denen zumindest eines axial verschieblich an der Welle gehalten ist, sowie Koppelglieder zum Koppeln mindestens eines Waschelementhalteteils mit den Haltegliedern, wobei ein jeweiliges Koppelglied am Waschelementhalteteil und an einem der Halteglieder angelenkt ist. Abhängig von einer auf das mindestens eine Waschelementhalteteil wirkenden Kraft kann der Abstand der daran gehaltenen festen Enden der Waschelemente relativ zur Welle unter axialer Verschiebung mindestens eines Haltegliedes verändert werden. Beispielsweise ist eine Mehrzahl von die Welle umgebenden Waschelementhalteteilen vorgesehen, die jeweils über Koppelglieder mit den Haltegliedern gekoppelt sind.

Günstig ist es, wenn eines der Halteglieder an der Welle unbeweglich festgelegt ist und wenn die Waschelementhalteeinrichtung zu beiden Seiten in axialer Richtung des axial verschieblichen Haltegliedes ein an der Welle unbeweglich festgelegtes Halteglied umfasst, wobei jeweils mindestens ein Waschelementhalteteil über ein jeweiliges Koppelglied am verschieblichen Halteglied und einem der unbeweglich festgelegten Halteglieder angelenkt ist. Bei einer Abstandsänderung des Waschelementhalteteils, das mit dem ersten, unbeweglichen Halteglied und dem verschieblichen Halteglied gekoppelt ist, kann der Abstand des weiteren Waschelementhalteteils, das mit dem verschieblichen Halteglied und dem zweiten unbeweglichen Halteglied gekoppelt ist, von der Welle in entgegengesetzter Weise und insbesondere reziprok verändert werden. Eine derartige Ausführungsform eignet sich beispielsweise besonders zur Anpassung an Fahrzeuge mit konkaver Außenkontur.

Die Waschelemente können Waschborsten oder Waschlappen sein, wobei unter Waschlappen vorliegend bahnen- oder streifenförmige Waschelemente verstanden werden.

Die Welle ist vorzugsweise geradlinig und insbesondere starr ausgestaltet.

Die Waschvorrichtung kann eine Seitenwaschvorrichtung sein, insbesondere eine Seitenbürste, oder eine Dachwaschvorrichtung, insbesondere eine Dachbürste.

Wie erwähnt betrifft die Erfindung auch eine Fahrzeugwaschanlage. Eine erfindungsgemäße Fahrzeugwaschanlage umfasst mindestens eine Waschvorrichtung der vorstehend genannten Art. Die Vorteile, die bereits im Zusammenhang mit der Erläuterung der erfindungsgemäßen Waschvorrichtung erwähnt wurden, können bei der Fahrzeugwaschanlage ebenfalls erzielt werden. Diesbezüglich kann auf voranstehende Erläuterungen verwiesen werden. Vorteilhafte Ausführungsformen der Fahrzeugwaschanlage ergeben sich durch vorteilhafte Ausführungsformen der erfindungsgemäßen Waschvorrichtung.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Ansicht einer herkömmlichen Fahrzeugwaschanlage, ausgestaltet als Portalwaschanlage, umfassend herkömmliche Waschvorrichtungen beim Waschen eines Fahrzeugs;
- Figur 2:: eine schematische Teildarstellung einer bevorzugten Ausführungsform einer erfindungsgemäßen Waschvorrichtung in einer Seitenansicht;
- Figur 3:: eine Ansicht entsprechend Figur 2, wobei die Waschvorrichtung an die Kontur eines zu reinigenden Fahrzeugs angepasst ist;
- Figur 4:: eine schematische Teildarstellung einer vorteilhaften Ausführungsform der Waschvorrichtung in axialer Blickrichtung einer Welle der Waschvorrichtung;
- Figur 5:: eine Darstellung entsprechend Figur 4, wobei auf die Waschvorrichtung eine radiale Kraft einwirkt;
- Figur 6:: eine weitere schematische Darstellung einer vorteilhaften Ausführungsform der Waschvorrichtung in axialer Blickrichtung;
- Figur 7:: eine Darstellung entsprechend Figur 6, wobei auf die Waschvorrichtung eine radiale Kraft einwirkt;
- Figur 8:: eine weitere schematische Darstellung einer vorteilhaften Ausführungsform der Waschvorrichtung in axialer Blickrichtung;
- Figur 9:: eine Darstellung entsprechend Figur 8, wobei auf die Waschvorrichtung eine radiale Kraft einwirkt;
- Figur 10:: eine schematische Teilansicht einer bevorzugten Ausführungsform einer erfindungsgemäßen Waschvorrichtung in einer Seitenansicht;
- Figur 11:: eine Darstellung entsprechend Figur 10, angepasst an die Kontur eines zu reinigenden Fahrzeugs;
- Figur 12:: eine schematische Ansicht einer bevorzugten Ausführungsform der Waschvorrichtung in axialer Blickrichtung im nicht angetriebenen Zustand;
- Figur 13:: eine Darstellung entsprechend Figur 12 im angetriebenen Zustand der Waschvorrichtung;
- Figur 14:: eine perspektivische schematische Teilansicht einer bevorzugten Ausführungsform der Waschvorrichtung;
- Figur 15:: eine schematische Darstellung einer vorteilhaften Ausführungsform der Waschvorrichtung in axialer Blickrichtung im nicht angetriebenen Zustand;
- Figur 16:: eine Darstellung entsprechend Figur 15 im angetriebenen Zustand;
- Figur 17:: eine schematische Darstellung einer vorteilhaften Ausführungsform der Waschvorrichtung in axialer Blickrichtung im angetriebenen Zustand;
- Figur 18:: eine perspektivische Teildarstellung einer weiteren vorteilhaften Ausführungsform der Waschvorrichtung in einer Grundstellung;
- Figur 19:: eine Darstellung entsprechend Figur 18, wobei die Waschvorrichtung eine Arbeitsstellung einnimmt;
- Figur 20:: eine perspektivische Teildarstellung einer weiteren vorteilhaften Ausführungsform der Waschvorrichtung in einer Grundstellung;
- Figur 21:: eine Darstellung entsprechend Figur 20, wobei die Waschvorrichtung eine Arbeitsstellung einnimmt;
- Figur 22:: eine perspektivische Teildarstellung einer weiteren vorteilhaften Ausführungsform der Waschvorrichtung in einer Grundstellung;
- Figur 23:: eine Darstellung entsprechend Figur 22, wobei die Waschvorrichtung eine Arbeitsstellung einnimmt;
- Figur 24:: eine schematische Teildarstellung einer vorteilhaften Ausführungsform der Waschvorrichtung in einer Seitenansicht;
- Figur 25:: eine Ansicht der Waschvorrichtung in Blickrichtung des Pfeiles "25" in Figur 24;
- Figur 26:: eine weitere vorteilhafte Ausführungsform der Waschvorrichtung in einer schematischen Seitenansicht;
- Figur 27:: eine weitere vorteilhafte Ausführungsform der Waschvorrichtung in einer schematischen Seitenansicht;
- Figur 28:: die Waschvorrichtung gemäß Figur 27 beim Waschen eines Sportwagens;
- Figur 29:: die Waschvorrichtung gemäß Figur 27 beim Waschen eines Kleinbusses oder Hochdachkombis und
- Figur 30:: eine weitere vorteilhafte Ausführungsform der Waschvorrichtung in einer schematischen Seitenansicht.

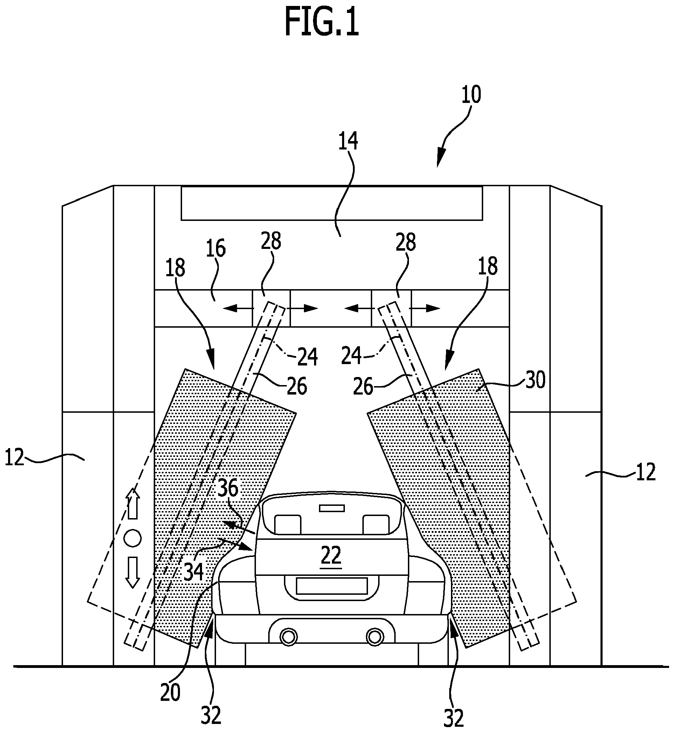

Figur 1 zeigt eine herkömmliche Fahrzeugwaschanlage, belegt mit dem Bezugszeichen 10 und ausgestaltet als Portalwaschanlage. Die Fahrzeugwaschanlage 10 umfasst seitliche Träger 12 und einen diese verbindenden Querträger 14. Über eine Halteeinrichtung 16 sind Waschvorrichtungen 18 beweglich am Waschportal gehalten. Die Waschvorrichtungen 18 sind Seitenwaschvorrichtungen zum seitlichen Waschen einer Karosserie 20 eines Fahrzeugs 22. Jede Waschvorrichtung 18 umfasst eine um eine Drehachse 24 drehend antreibbare Welle 26. Hierzu umfasst die Fahrzeugwaschanlage 10 jeweils eine Antriebseinrichtung 28.

An der Welle 26 sind Waschelemente 30 festgelegt. Im drehend angetriebenen Zustand nimmt die Waschvorrichtung 18 eine ungefähr zylindrische und in Seitenansicht rechteckförmige Kontur ein, wie dies in Figur 1 schematisch dargestellt ist.

Bei der herkömmlichen Fahrzeugwaschanlage besteht das Problem, dass eine Anpassung an die Kontur des Fahrzeugs 22 durch die Waschvorrichtung 18 nicht möglich ist. Bei der in Figur 1 gezeigten Situation, bei der das Fahrzeug 22 ein Sportwagen ist, lassen sich über die Waschvorrichtung 18 seitlich oben liegende Bereiche und die Seitenfenster des Fahrzeugs 22 reinigen, es verbleiben jedoch ungereinigte Bereiche 32 seitlich unten an der Karosserie 20 und im Bereich der Räder.

Würde abweichend von der in Figur 1 dargestellten Situation die Welle 26 mit ungefähr vertikaler Ausrichtung der Drehachse 24 an das Fahrzeug geführt, würden zwar die seitlich unten an der Karosserie 20 liegenden Bereiche abgereinigt, es würden jedoch ungereinigte oder nur unzureichend gereinigte Bereiche seitlich oben verbleiben.

Ähnliche Schwierigkeiten treten beispielsweise beim Reinigen von Limousinen mit einer ungefähr trapezförmigen Kontur auf.

Beim Anlegen an das Fahrzeug 22 übt die Waschvorrichtung 18 auf dieses eine mit einem Pfeil 34 gekennzeichnete Anlagekraft auf, die quer und insbesondere senkrecht zur Drehachse 24 ausgerichtet ist.

Das Fahrzeug 22 übt eine über einen Pfeil 36 symbolisierte Gegenkraft auf die Waschvorrichtung 18 aus. Die Gegenkraft 36 wird über die Waschelemente 30 auf die Welle 26 übertragen.

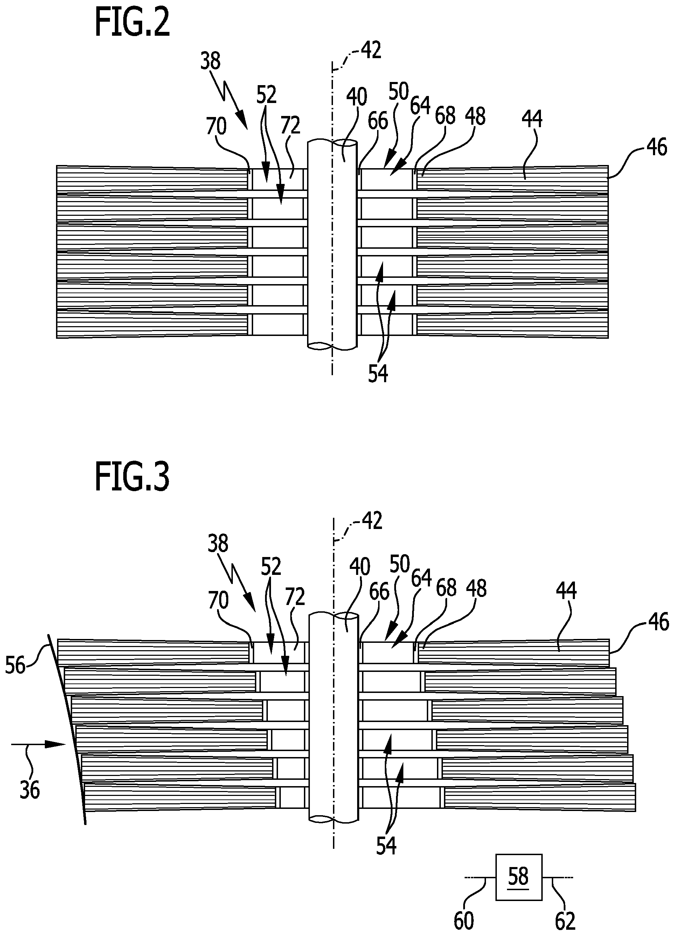

Nachfolgend wird die Erfindung unter Bezugnahme auf die Figuren 2 bis 30 erläutert. Es werden mehrere vorteilhafte Ausführungsformen einer erfindungsgemäßen Waschvorrichtung vorgeschlagen, die bei einer erfindungsgemäßen Fahrzeugwaschanlage zum Einsatz kommen können. Die Fahrzeugwaschanlage kann beispielsweise als Portalwaschanlage ausgestaltet sein wie die Fahrzeugwaschanlage 10 (abgesehen von deren nicht-erfindungsgemäßen Waschvorrichtungen 18). Bei einer andersartigen Ausführungsform kann die erfindungsgemäße Fahrzeugwaschanlage eine Waschstraße sein.

Die nachfolgend erläuterten erfindungsgemäßen Waschvorrichtungen können Seitenwaschvorrichtungen zum seitlichen Reinigen von Fahrzeugen sein. Es kann sich jedoch auch um "Dach"waschvorrichtungen handeln, mit der die obenseitig am Fahrzeug angeordneten Bereiche und insbesondere das Dach gereinigt werden können.

Nachfolgend werden für gleiche oder gleichwirkende Merkmale oder Bauteile der unterschiedlichen Ausführungsformen identische Bezugszeichen benutzt. Es wird nur auf die für das Verständnis der Erfindung bedeutsamsten Unterschiede der unterschiedlichen Ausführungsformen eingegangen. Bei den Ausführungsformen kann jeweils insbesondere vorgesehen sein, dass eine jeweilige Welle starr und geradlinig ausgestaltet ist. Als Waschelemente können jeweils Waschborsten oder streifenförmige Waschlappen vorgesehen sein.

Die erfindungsgemäßen Waschvorrichtungen erlauben insbesondere jeweils eine Anpassung an die Kontur des zu reinigenden Fahrzeugs wie nachfolgend erläutert.

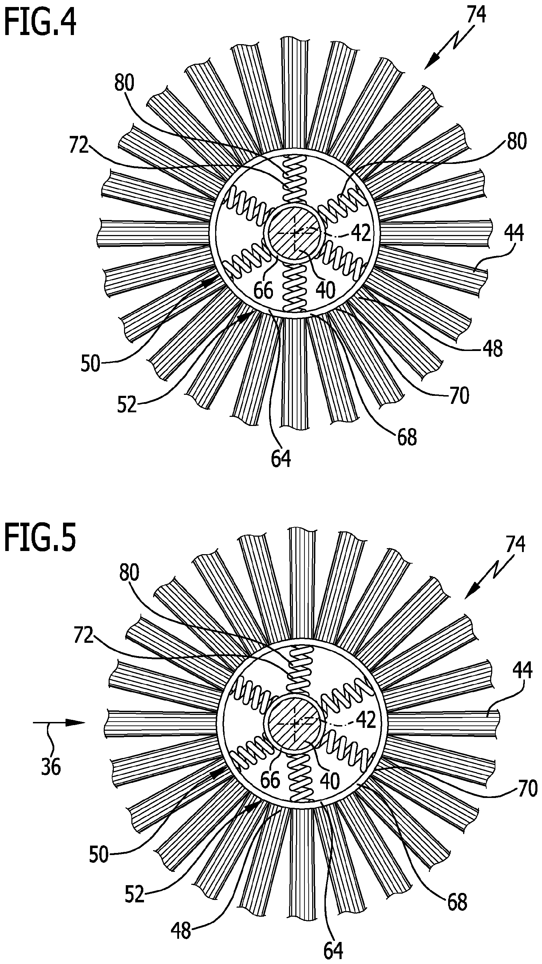

Die Figuren 2 und 3 verdeutlichen schematisch das Funktionsprinzip von in den Figuren 4 bis 9 dargestellten Ausführungsformen der erfindungsgemäßen Waschvorrichtung. Die Waschvorrichtung 38 gemäß den Figuren 2 und 3 umfasst eine Welle 40, die eine Drehachse 42 definiert. Die Waschvorrichtung 38 ist um die Drehachse 42 drehend antreibbar.

Es sind Waschelemente 44 vorgesehen, die freie Enden 46 und feste Enden 48 aufweisen.

Die Waschvorrichtung 38 umfasst eine Waschelementhalteeinrichtung 50. Die Waschelementhalteeinrichtung 50 dient zum Halten der Waschelemente 44 an der Welle 40 und ist drehfest mit dieser gekoppelt, so dass die Waschelemente 44 zum Abreinigen des Fahrzeugs 22 gedreht werden können.

Die Waschelementhalteeinrichtung 50 umfasst eine Mehrzahl von Waschelementhalteeinheiten 52, die insbesondere identisch ausgestaltet sind. Die Waschelementhalteeinheiten 52 sind axial nebeneinander an der Welle 40 angeordnet. "Axial" und "radial" bezieht sich vorliegend, soweit nicht anders erwähnt, auf die Drehachse 42.

Jede Waschelementhalteeinheit 52 bildet ein Segment 54 der Waschelementhalteeinrichtung 50. Bei der Waschvorrichtung 38 besteht die Möglichkeit, segment-(54)-weise eine Anpassung an die in Figur 3 schematisch dargestellte Kontur 56 des Fahrzeugs 22 zu ermöglichen. Zu diesem Zweck können die Segmente 54 abhängig von einer jeweiligen Gegenkraft 36 relativ zur Welle 40 eine unterschiedliche Konfiguration oder Position. Die Gegenkraft 36 variiert axial abhängig von der Kontur 56. Die Konfiguration oder Position der Segmente 54 kann unabhängig voneinander eingenommen werden.

Bei der Waschvorrichtung 38 besteht die Möglichkeit, eine jeweilige Anlagekraft oder einen jeweiligen Anpressdruck der Waschelementhalteeinheiten 52 oder Segmente 54 an das Fahrzeug zu ermitteln. Diesbezügliche Signale können über eine Signalleitung 60 einer Steuereinheit 58 der Fahrzeugwaschanlage zugeleitet werden. Über eine Steuerleitung 62 kann einer Halteeinrichtung oder einer Antriebseinrichtung für die Waschvorrichtung 38 ein Steuersignal zugeführt werden. Dies gibt die Möglichkeit, die Position der Waschvorrichtung 38 relativ zum Fahrzeug so zu wählen, dass Anlagekraft oder Anpressdruck einen vorgegebenen Wert einnehmen oder innerhalb eines vorgegebenen Wertebereichs liegen. Dadurch kann sichergestellt werden, dass die Reibung der Waschelemente 44 am Fahrzeug ausreichend ist, um ein gutes Reinigungsergebnis zu erzielen, jedoch nicht so groß, dass das Fahrzeug möglicherweise beschädigt wird.

Die vorstehend erwähnten Merkmale können bei allen der nachfolgend erläuterten weiteren vorteilhaften Ausführungsformen der erfindungsgemäßen Waschvorrichtung ebenfalls vorhanden sein.

Die Waschelementhalteeinheiten 52 umfassen jeweils einen Grundkörper 64. Dieser weist eine zylindrische Gestalt auf. In Abwesenheit der Gegenkraft 36 ist der Grundkörper 64 koaxial zur Drehachse 42 ausgerichtet.

Der Grundkörper 64 umfasst radial innenseitig einen ersten Abschnitt 66 und radial außenseitig einen zweiten Abschnitt 68. Über den ersten Abschnitt 66 ist der Grundkörper 64 drehfest mit der Welle verbunden, zum Beispiel durch Formschluss und/oder Kraftschluss.

Der zweite Abschnitt 68 bildet ein Waschelementhalteteil 70 der Waschelementhalteeinrichtung 50. Am Waschelementhalteteil 70 sind die Waschelemente 44 mit ihren festen Enden 48 gehalten. Dabei sind die Waschelemente 44 an dem vom zweiten Abschnitt 68 gebildeten Mantel des Grundkörpers 64 festgelegt.

Die Abschnitte 66, 68 sind so drehfest miteinander gekoppelt, dass bei drehender Welle 40 die Drehbewegung an die Waschelemente 44 übertragen werden kann.

Zum Koppeln der Abschnitte 66, 68 ist ferner mindestens ein elastisches Element 72 vorgesehen. Das elastische Element 72 erlaubt eine Bewegung und insbesondere Verschiebung des zweiten Abschnittes 68 relativ zum ersten Abschnitt 66. Insbesondere ist der zweite Abschnitt 68 relativ zum ersten Abschnitt 66 in einer Ebene senkrecht zur Drehachse 42 schwimmend gelagert. Abhängig von der jeweils wirkenden Gegenkraft 36 ist der zweite Abschnitt 68 dadurch exzentrisch zum ersten Abschnitt 66 positioniert und damit abhängig von der Kontur 56 des Fahrzeugs (Figur 3). Entfällt die Gegenkraft 36, sind die Abschnitte 66, 68 konzentrisch zueinander ausgerichtet (Figur 2).

Im Ergebnis ist dadurch bei der Waschvorrichtung 38 die Möglichkeit gegeben, dass die Waschelementhalteteile 70 der Waschelementhalteeinrichtung 50 relativ zur Welle 40 beweglich ausgebildet sind. Bei Kraftbeaufschlagung über die Gegenkraft 36 radial nach innen im angetriebenen Zustand der Welle 40 können die Waschelementhalteteile 70 relativ zu dieser bewegt werden zum Verringern des Abstandes der festen Enden 48 der Waschelemente 44 von der Welle 40.

Insbesondere ist ein Waschelementhalteteil 70 eines Grundkörpers 64 unabhängig vom Waschelementhalteteil 70 eines weiteren Grundkörpers 64 relativ zur Welle 40 beweglich. Ferner ist es günstig, dass der Abstand der festen Enden 48 abhängig von deren Position axial bezüglich der Drehachse 42 zur Anpassung an die Kontur in unterschiedlichem Ausmaß veränderbar ist. Dies wird durch die Unterteilung der Waschelementhalteeinrichtung 50 axial in zwei oder mehr Waschelementhalteeinheiten 52 ermöglicht, deren Waschelementhalteteile 70 unabhängig von denjenigen der jeweils anderen Waschelementhalteeinheiten 52 relativ zur Welle 40 beweglich sind.

Diese Merkmale und die damit verbundenen Vorteile sind auch bei den nachfolgend erläuterten weiteren vorteilhaften Ausführungsformen der erfindungsgemäßen Waschvorrichtung umgesetzt.

Die Figuren 4 und 5, 6 und 7 sowie 8 und 9 zeigen Ausführungsformen der Waschvorrichtung mit den Bezugszeichen 74, 76 bzw. 78, welche nach dem Prinzip der Waschvorrichtung 38 funktionieren.

Bei der Waschvorrichtung 74 ist als elastisches Element 72 eine Feder 80 vorgesehen, insbesondere eine Schraubenfeder. Insgesamt sind fünf Federn 80 vorhanden, die die Abschnitte 66 und 68 miteinander verbinden. Die Federn 80 können auf Zug oder auf Druck ausgelegt sein. Die Figur 5 entspricht der Darstellung gemäß Figur 2, bei der keine Gegenkraft 36 wirkt. Die Figur 5 entspricht der Darstellung gemäß Figur 3, bei der der zweite Abschnitt 68 relativ zur Welle 40 in der Ebene senkrecht zur Drehachse 42 verschoben ist.

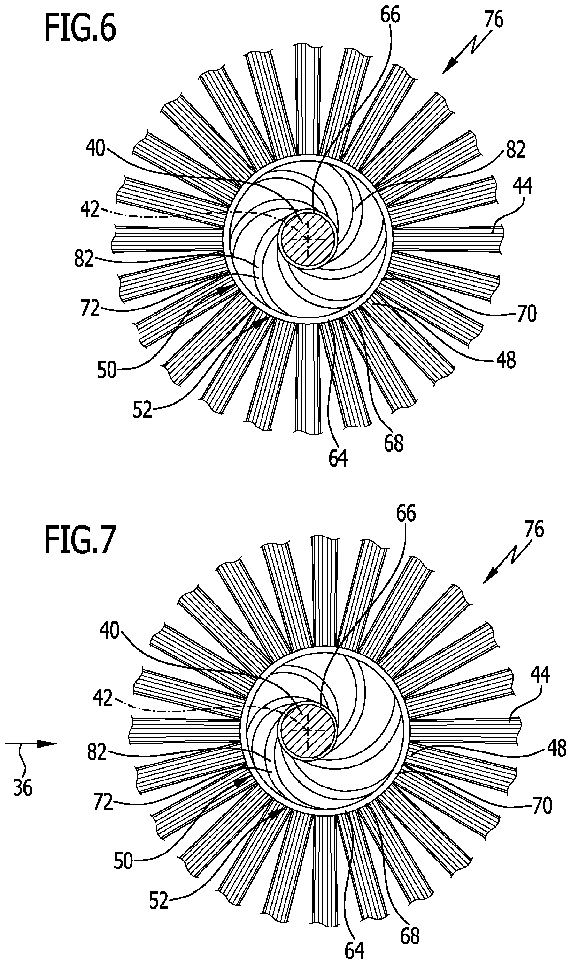

Bei der Waschvorrichtung 76 ist das elastische Element 72 ein Federsteg, der die Abschnitte 66 und 68 miteinander verbindet. Vorliegend sind sechs Federstege 82 vorgesehen. Die Federstege 82 verlaufen spiralförmig bezüglich der Drehachse 42. Die Figur 6 entspricht der in Figur 2 dargestellten Situation ohne Einwirken einer Gegenkraft 36. Die Figur 7 entspricht der in Figur 3 dargestellten Situation, bei der die Gegenkraft 36 wirkt und der zweite Abschnitt 68 relativ zur Welle 40 verschoben ist.

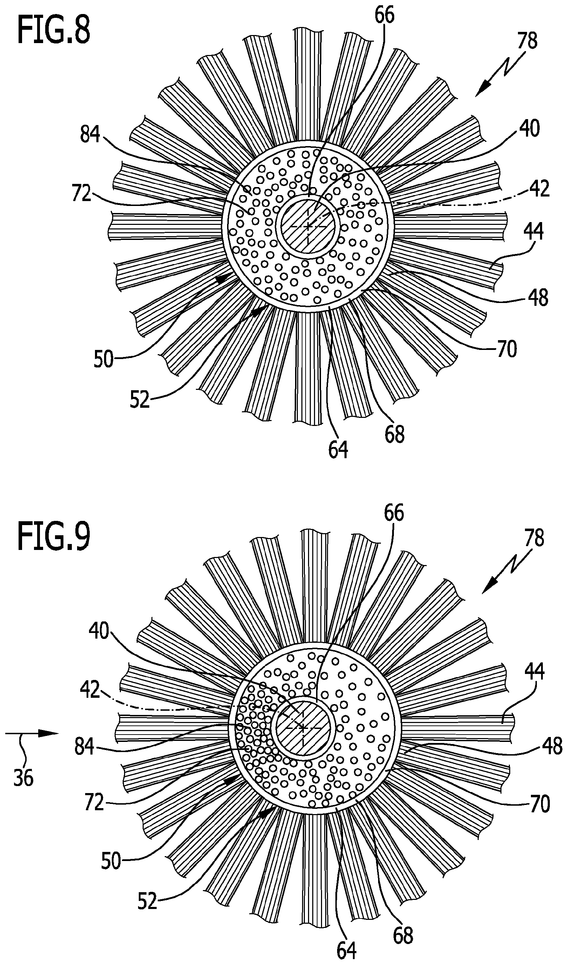

Bei der Waschvorrichtung 78 ist das elastische Element 72 ein elastisch verformbares Material 84. Das elastisch verformbare Material 84 ist beispielsweise ein Schaumstoffmaterial oder ein Gummimaterial. Das Material 84 füllt vorzugsweise den gesamten Raum zwischen den Abschnitten 66 und 68 aus. Die Figur 8 entspricht der in Figur 2 dargestellten Situation ohne Einwirken einer Gegenkraft 36. Die Figur 9 entspricht der in Figur 3 dargestellten Situation, bei der die Gegenkraft 36 zu einer Bewegung des Abschnittes 68 relativ zur Welle 40 führt.

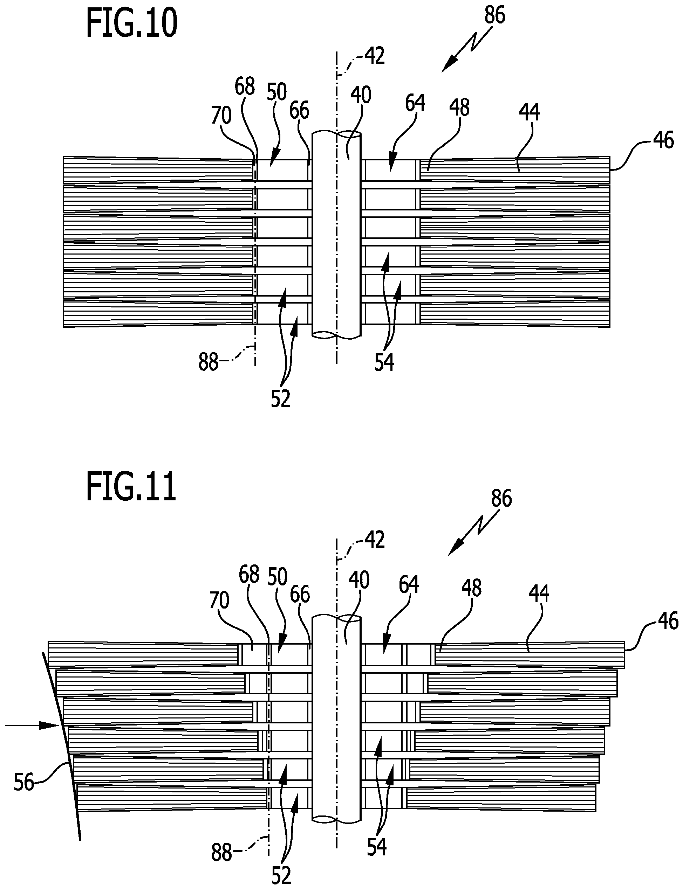

Die Figuren 10 und 11 zeigen eine vorteilhafte Ausführungsform der erfindungsgemäßen Waschvorrichtung, die mit dem Bezugszeichen 86 belegt ist. Im Aufbau ähnelt die Waschvorrichtung 86 der Waschvorrichtung 38, wobei die Waschelementhalteeinrichtung 50 jeweils in Waschelementhalteeinheiten 52 unterteilt ist, die axial nebeneinander angeordnet sind. Es sind jeweilige Grundkörper 64 mit den Abschnitten 66, 68 vorhanden.

Die Abschnitte 66 und 68 sind bei der Waschvorrichtung 86 starr miteinander verbunden, insbesondere einstückig. Alternativ ist denkbar, dass auch bei der Waschvorrichtung 86 ein jeweiliges elastisches Element 72 zwischen den Abschnitten 66, 68 der Grundkörper 64 wirksam ist.

Bei den Waschelementhalteeinheiten 52 werden die Waschelementhalteteile 70 nicht vom zweiten Abschnitt 68 gebildet. Stattdessen sind gesonderte Waschelementhalteteile 70 vorgesehen. An jedem Grundkörper 64 ist eine Mehrzahl von Waschelementhalteteilen 70 am zweiten Abschnitt 68 angeordnet, vorzugsweise entlang des gesamten Umfangs und insbesondere äquidistant zueinander.

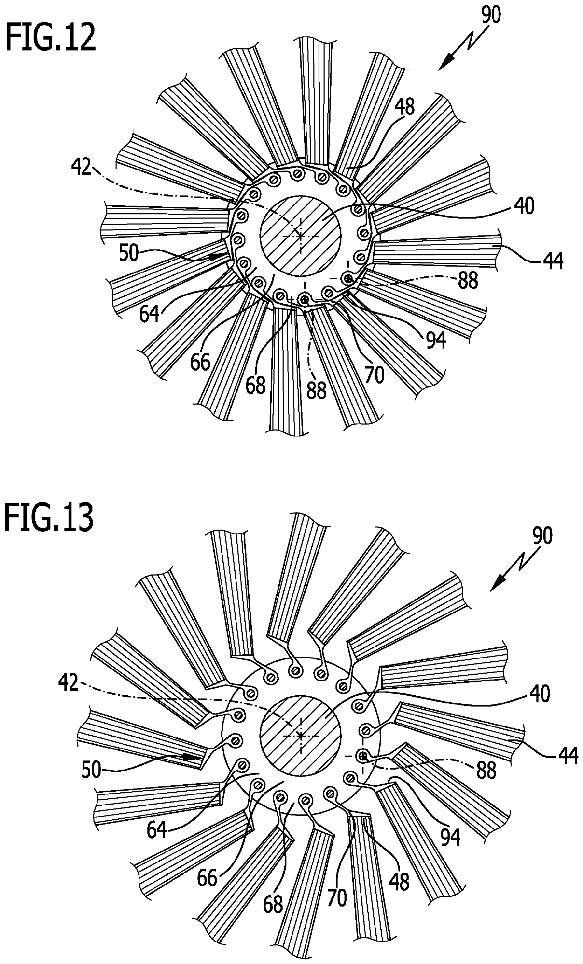

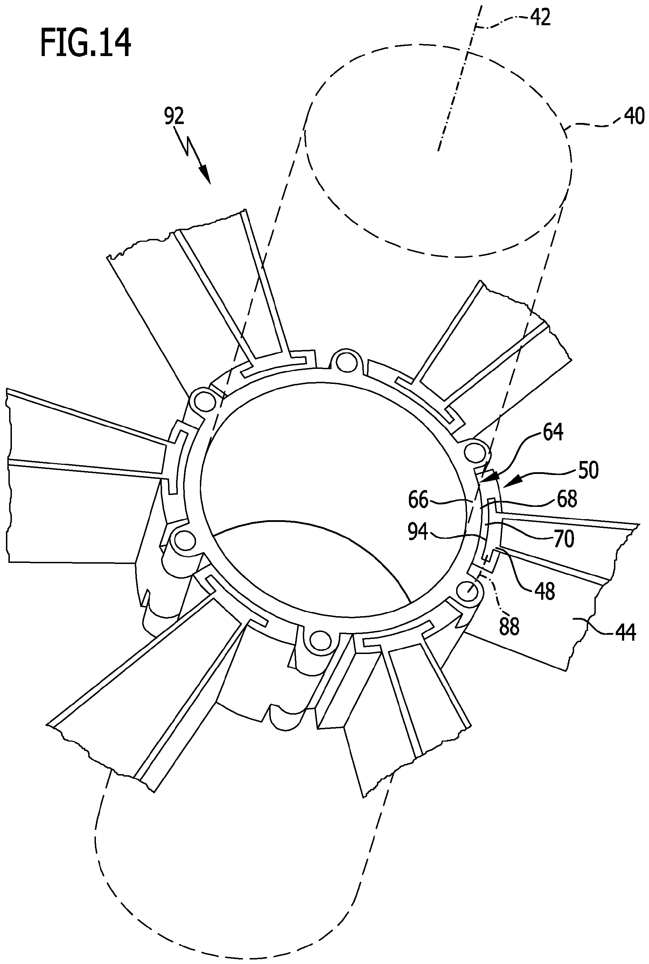

Die Waschelementhalteteile 70 sind relativ zum Grundkörper 64 schwenkbar ausgestaltet, vorzugsweise um eine jeweilige Schwenkachse 88 parallel zur Drehachse 42. Eine derartige Konstruktion ist beispielsweise bei vorteilhaften Ausführungsformen der Waschvorrichtung umgesetzt, die in den Figuren 12 und 13 (Waschvorrichtung 90) bzw. in Figur 14 (Waschvorrichtung 92) gezeigt sind. Dabei entsprechen die Figuren 12 und 14 der in Figur 10 dargestellten Situation, in der die Waschvorrichtungen 86, 90 und 92 nicht angetrieben und drehend sind. Die Figur 13 entspricht der in Figur 11 dargestellten Situation, in der die Waschvorrichtungen 86 bzw. 90 angetrieben sind und eine Gegenkraft 36 über die Kontur 56 des Fahrzeugs auf die Waschvorrichtungen 86, 90 wirken kann.

Im nicht angetriebenen Zustand der Waschvorrichtung 86 nehmen die Waschelementhalteteile 70 relativ zum Grundkörper 64 eine Grundstellung ein (Figur 10). Die Waschelementhalteteile 70 und damit die Waschelementhalteeinrichtung 50 sind fliehkraftbetätigt. Wird die Waschvorrichtung 86 angetrieben, verschwenken die Waschelementhalteteile 70 relativ zum Grundkörper 64. Dadurch gelangen die Waschelemente 44 über ihre festen Enden 48 in größeren Abstand relativ zur Welle 40. Bei Auftreten der Gegenkraft 36 werden die Waschelementhalteteile 70 in Gegenrichtung relativ zum Grundkörper 64 verschwenkt. Dadurch wird der Abstand der festen Enden 48 von der Welle 40 verringert. Dies entspricht der in Figur 11 dargestellten Situation, bei der auf die Waschelementhalteeinheiten 52 von unten nach oben betrachtet eine abnehmende Gegenkraft 36 aufgrund der Kontur 56 des Fahrzeugs 22 einwirkt.

Bei den Waschelementhalteeinheiten 52 der Waschvorrichtung 86 ist dadurch die Möglichkeit gegeben, den Durchmesser der jeweiligen Segmente 54 im angetriebenen Zustand der Welle 40 abhängig von der Gegenkraft 36 unterschiedlich zu gestalten und dadurch eine Anpassung an die Kontur 56 segment-(54)-weise zu erzielen.

Es kann vorgesehen sein, dass das Verschwenken der Waschelementhalteteile 70 relativ zum Grundkörper 64 entgegen der Wirkung einer in der Zeichnung nicht dargestellten Rückstelleinrichtung erfolgt. Im nicht angetriebenen Zustand kann zum Beispiel durch die Rückstelleinrichtung sichergestellt sein, dass die Waschelementhalteteile 70 eine möglichst nahe Position am Grundkörper 64 einnehmen und der Durchmesser eines jeweiligen Segmentes 54 minimal ist. Die Rückstelleinrichtung ist beispielsweise magnetisch, elektromagnetisch oder mechanisch ausgestaltet.

Wird die Welle 40 angetrieben, verschwenken die Waschelementhalteteile 70 von der Grundstellung in eine Arbeitsstellung, in der die festen Enden 48 weiter vom Grundkörper 64 beabstandet sind als in der Grundstellung.

Die Waschvorrichtung 90 entspricht, wie erwähnt, in der Funktionsweise der Waschvorrichtung 86. Die Waschelementhalteteile 70 sind dabei als Klappen 94 ausgestaltet, an denen die Waschelemente 44 festgelegt sind. Die Klappen 94 sind um die Schwenkachsen 88 am zweiten Abschnitt 68 des Grundkörpers 64 schwenkbar gelagert.

Bei der Waschvorrichtung 90 sind beispielsweise 16 Klappen 94 vorgesehen, die vorzugsweise äquidistant zueinander am zweiten Abschnitt 68 angeordnet sind.

Die Anzahl der Klappen 94 sowie deren Ausgestaltung können auch unterschiedlich sein. Beispielsweise ist bei der Waschelementhalteeinheit 52 der Waschvorrichtung 92 eine Anzahl von sechs Klappen 94 vorgesehen.Die Waschvorrichtung 92 ist in Figur 14 nur teilweise dargestellt, die Welle 40 ist angedeutet, und es ist nur eine Waschelementhalteeinheit 52 gezeigt.

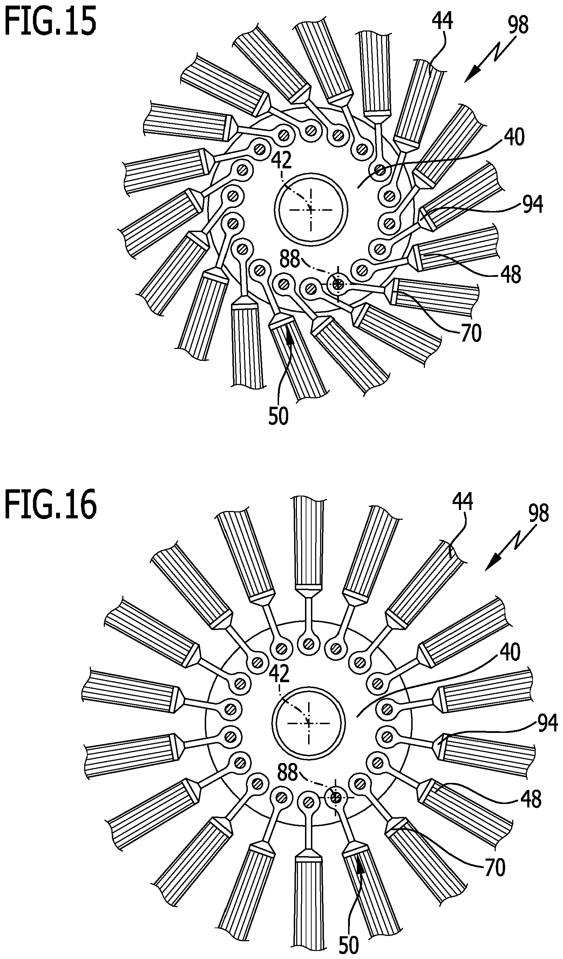

Die Figuren 15 und 16 zeigen eine mit dem Bezugszeichen 98 belegte vorteilhafte Ausführungsform der erfindungsgemäßen Waschvorrichtung.

Die Waschvorrichtung 98 ähnelt in ihrer Funktionsweise der Waschvorrichtung 86 gemäß den Figuren 10 und 11. Im Unterschied hierzu umfasst die Waschelementhalteeinrichtung 50 jedoch keinen Grundkörper 64. Stattdessen ist vorgesehen, dass die Waschelementhalteteile 70 direkt mit der Welle 40 verbunden sind. Insbesondere sind die Waschelementhalteteile 70 ebenfalls schwenkbar um Schwenkachsen 88 parallel zur Drehachse 42. Die Anlenkung der ebenfalls als Klappen 94 ausgestalteten Waschelementhalteteile 70 erfolgt dadurch direkt an der Welle 40.

Figur 15 entspricht der in Figur 10 dargestellten Situation bei nicht angetriebener Welle 40. Unter Antreiben der Welle können die Klappen 94 fliehkraftbetätigt relativ zur Welle 40 verschwenken, um den Abstand der festen Enden 48 von der Welle 40 zu vergrößern (Figur 16). Durch Einwirken einer Gegenkraft 36 können die Klappen 94 unter Verringerung des Abstandes der festen Enden 48 von der Welle 40 in die Gegenrichtung verschwenkt werden, um eine Anpassung an die Kontur 56 zu ermöglichen.

Die Waschelementhalteteile 70 bei der Waschvorrichtung 98 erstrecken sich in axialer Richtung jeweils nur über einen Abschnitt der Welle 40. Axial neben den hier dargestellten Waschelementhalteteilen 70 (oberhalb oder unterhalb der Zeichenebene) können weitere Waschelementhalteteile 70 schwenkbar an der Waschvorrichtung 98 gehalten sein, die unabhängig von den in der Zeichenebene gezeigten Waschelementhalteteilen 70 verschwenkbar sind. Auch bei der Waschvorrichtung 98 kann dadurch abhängig von der jeweiligen axialen Position der Waschelemente 44 eine unabhängige Verschwenkung der Waschelementhalteteile 70 zur besseren Anpassung an die Kontur 56 erfolgen.

Die Welle 40 ist bei der Waschvorrichtung 98 als Hohlwelle ausgestaltet. Dies ist bei den Wellen 40 der jeweils anderen Ausführungsformen ebenfalls möglich.

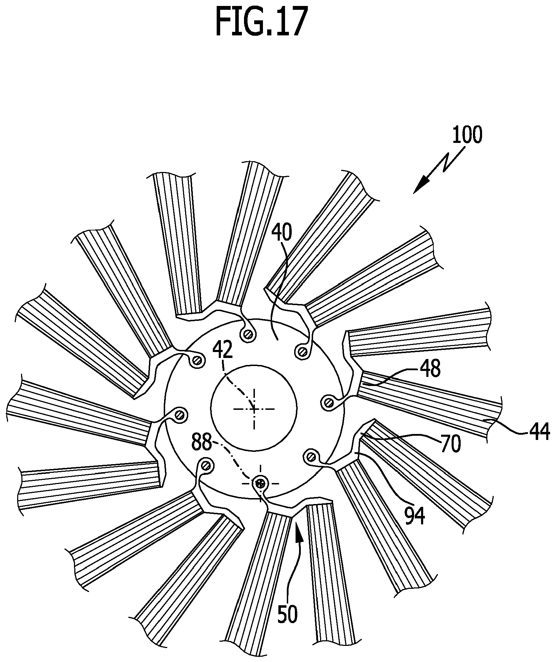

Eine in Figur 17 dargestellte vorteilhafte Ausführungsform der erfindungsgemäßen Waschvorrichtung ist mit dem Bezugszeichen 100 belegt.. Die Funktionsweise entspricht derjenigen der Waschvorrichtung 98. Figur 17 zeigt die Waschvorrichtung im angetriebenen Zustand der Welle 40 entsprechend Figur 16.

Bei der Waschvorrichtung 100 sind die Waschelementhalteteile 70 andersartig als diejenigen der Waschvorrichtung 98 ausgestaltet, und deren Anzahl ist unterschiedlich (8 Stück statt 18 Stück). Jedes Waschelementhalteteil 70 weist einen Besatz mit Waschelementen 44 auf, der doppelt so viele Waschelemente 44 umfasst wie bei einem jeweiligen Waschelementhalteteil 70 der Waschvorrichtung 98. Die Anzahl der Waschelementhalteteile 70 und der Umfang des Besatzes mit Waschelementen 44 könnten jedoch auch unterschiedlich sein.

Mit Bezug auf die Figuren 10 bis 17 wurden um parallel zur Drehachse 42 ausgerichtete Schwenkachsen verschwenkbare Waschelementhalteteile 70 erläutert. Denkbar ist, dass die Schwenkachsen auch schräg, quer oder senkrecht zur Drehachse 42 ausgerichtet sind.

Alternativ oder ergänzend ist denkbar, dass Waschelementhalteteile 70 verschieblich am Grundkörper 64 oder an der Welle 40 gelagert sind. Beispielsweise ist die Möglichkeit einer Verschiebung in radialer Richtung zur Änderung des Abstandes der festen Enden 48 von der Welle 40 gegeben.

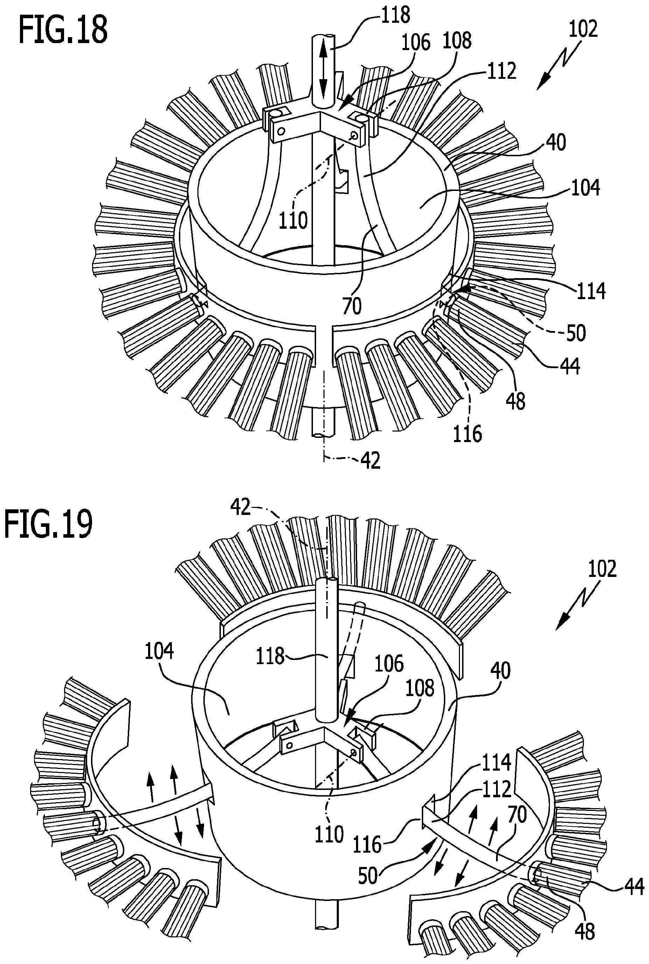

Die Figuren 18 und 19 zeigen eine mit dem Bezugszeichen 102 belegte vorteilhafte Ausführungsform einer erfindungsgemäßen Waschvorrichtung, wobei die Welle 40 nur teilweise dargestellt ist. Die Welle 40 ist als Hohlwelle ausgestaltet und umschließt einen Raum 104. Im Raum 104 ist ein Haltekörper 106 der Waschelementhalteeinrichtung 50 angeordnet und bevorzugt koaxial zur Drehachse 42 ausgerichtet.

Der Haltekörper 106 kann nabenförmig oder, wie vorliegend, beispielsweise sternförmig ausgestaltet sein. Der Haltekörper 106 umfasst Halteglieder 108, an denen jeweils ein Waschelementhalteteil 70 gehalten ist. Vorliegend ist das Waschelementhalteteil 70 um eine quer und insbesondere senkrecht zur Drehachse 42 ausgerichtete Schwenkachse 110 am Halteglied 108 gelagert. Möglich ist jedoch auch eine andersartige Ausrichtung der Schwenkachse 110, eine verschiebliche Lagerung oder eine unbewegliche Festlegung.

Die Waschelementhalteteile 70 sind als Stäbe 112 ausgebildet, die insbesondere flexibel und vorzugsweise elastisch verformbar sind. Die Stäbe 112 durchgreifen jeweilige Durchgangsöffnungen 114 in der Welle 40. Endseitig sind an den Stäben 112 Waschelemente 44 über deren feste Enden 48 festgelegt.

Wird die Welle 40 angetrieben, werden die Waschelemente 44 dadurch in Rotation versetzt, dass Ränder 116 der Durchgangsöffnungen 114 Mitnehmeranschläge bilden für die Stäbe 112 und die Drehbewegung auf diese übertragen.

Die Waschelementhalteeinrichtung 50 bei der Waschvorrichtung 102 ist insbesondere fliehkraftbetätigt (Figur 19). Unter Rotation der Welle 40 ragen die Stäbe 112 soweit wie möglich radial nach außen. Über die Gegenkraft 36 aufgrund der Kontur 56 des Fahrzeugs 22 können die Stäbe 112 verformt und dadurch der Abstand der festen Enden 48 von der Welle 40 verringert werden. Unter elastischer Rückverformung können die Stäbe 112 wieder ihre ursprüngliche Gestalt annehmen.

Gezeigt ist in den Figuren 18 und 19 nur eine einer Mehrzahl von axial nebeneinander angeordneten Waschelementhalteeinheiten 52. Auch bei der Waschvorrichtung 102 ist eine segment-(54)-weise Anpassung an die Kontur 56 möglich. Entsprechendes gilt für die Waschvorrichtungen 120 und 132 wie nachfolgend erläutert.

Die Waschvorrichtung 102 umfasst ferner ein im Raum 104 angeordnetes Verstellelement 118. Das Verstellelement 118 ist vorliegend eine koaxial zur Drehachse 42 ausgerichtete Stange, die an den Haltekörpern 106 festgelegt ist. Wird das Verstellelement 118 axial verschoben, werden die Haltekörper 106 relativ zur Welle 40 ebenfalls axial verschoben. Dies gibt die Möglichkeit, die Haltekörper 106 und damit die Waschvorrichtung 102 von einer Grundstellung (Figur 18) in mindestens eine Arbeitsstellung (Figur 19) zu überführen, insbesondere bei Inbetriebnahme der Waschvorrichtung 102. In der mindestens einen Arbeitsstellung ist der Abstand der festen Enden 48 von der Welle 40 größer als in der Grundstellung. Umgekehrt können die Haltekörper 106 von der mindestens einen Arbeitsstellung wieder in die Grundstellung überführt werden, indem das Verstellelement 118 axial bewegt wird.

Durch das Verstellelement 118 ist dadurch insbesondere eine Zwangsverstellung für die Waschelementhalteteile 70 ermöglicht, um deren Relativposition zur Welle 40 zu verändern.

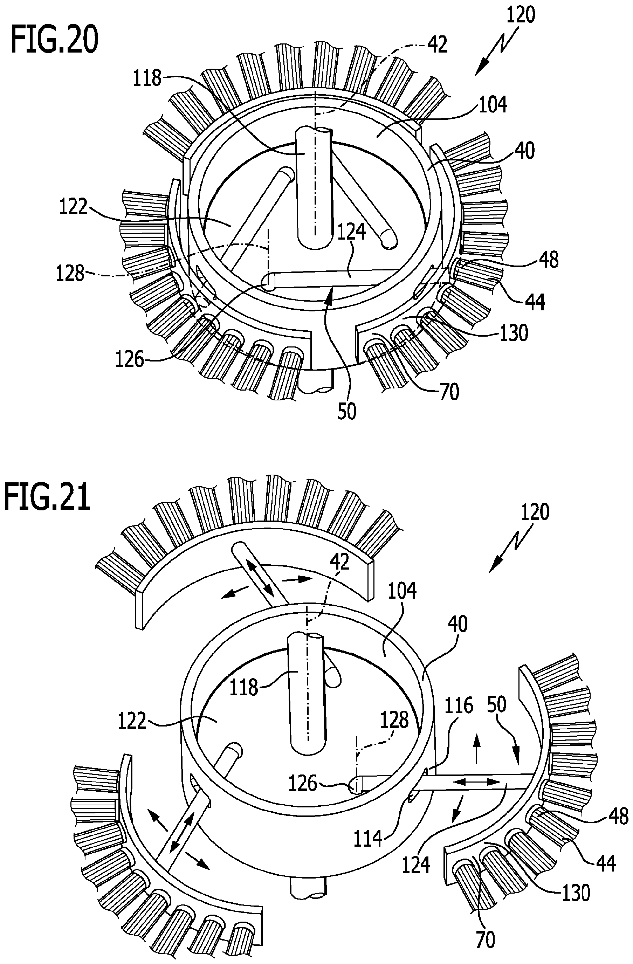

Die Figuren 20 und 21 zeigen eine mit dem Bezugszeichen 120 belegte vorteilhafte Ausführungsform der Waschvorrichtung. Die Waschvorrichtung 120 ist in Aufbau und Funktionsweise der Waschvorrichtung 102 ähnlich und ebenso wie diese nur teilweise dargestellt. Im Raum 104 der als Hohlwelle ausgestalteten Welle 40 sind Haltekörper 106 angeordnet, ausgestaltet als Scheiben 122.. Die Scheiben 122 sind konzentrisch zur Drehachse 42 ausgerichtet. Die Waschelementhalteteile 70 umfassen Stäbe 124, die die Durchgangsöffnungen 114 durchgreifen und bei angetriebener Welle 40 von deren Rändern 116 in Drehung versetzt werden.

Die Stäbe 124 sind längenveränderlich ausgestaltet. Ihre im Raum 104 angeordneten Enden sind an Gelenken 126 um Schwenkachsen 128 parallel zur Drehachse 42 und exzentrisch zu dieser gelagert.

Am außerhalb des Raumes 104 abgewandten Ende umfassen die Waschelementhalteteile 70 an den Stäben 124 jeweils ein Halteglied 130. Das Halteglied 130 ist beispielsweise plattenförmig ausgestaltet. Die Waschelemente 44 sind über ihre festen Enden 48 am Halteglied 130 gehalten.

Auch die Waschvorrichtung 120 ist fliehkraftbetätigt. Unter Rotation der Welle 40 verschwenken die Stäbe 124 relativ zur Scheibe 122 und ragen so weit wie möglich über die Welle 40 hinaus (Figur 21). Bei Auftreten einer Gegenkraft 36 können die Stäbe 124 in der Länge verkürzt und dadurch der Abstand der festen Enden 48 von der Welle 40 verringert werden.

Bei der Waschvorrichtung 120 ist ebenfalls das Verstellelement 118 vorgesehen. Das Verstellelement 118 ist drehfest mit den Scheiben 122 gekoppelt. Dadurch ist auch bei der Waschvorrichtung 120 eine Zwangsverstellung möglich. Durch Drehen des Verstellelements 118 werden die Haltekörper 106 um die Drehachse 42 gedreht und von einer Grundstellung (Figur 20) in mindestens eine Arbeitsstellung (Figur 21) überführt. In der mindestens einen Arbeitsstellung ist der Abstand der festen Enden 48 von der Welle 40 größer als in der Grundstellung.

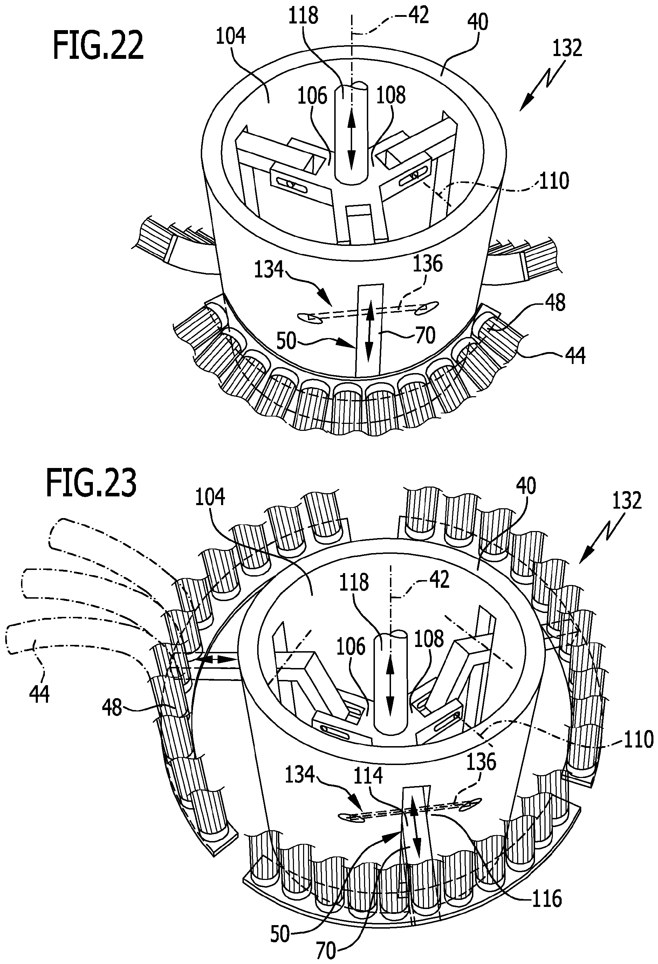

Die Figuren 22 und 23 zeigen eine weitere, mit dem Bezugszeichen 132 belegte vorteilhafte Ausführungsform der erfindungsgemäßen Waschvorrichtung. Die Waschvorrichtung 132 ist in Aufbau und Funktionsweise der Waschvorrichtung 102 ähnlich, wobei die Figur 22 der Figur 18 und die Figur 23 der Figur 19 entspricht.

Auch bei der Waschvorrichtung 132 sind Haltekörper 106 vorgesehen, an deren Haltegliedern 108 die Waschelementhalteteile 70 insbesondere schwenkbar gelagert sind. Die Waschelementhalteteile 70 sind starr ausgestaltet, könnten jedoch auch flexibel sein. Vorliegend sind die Waschelementhalteteile 70 längenveränderlich und leistenförmig mit einer Abwinklung, ungefähr L-förmig.

Bei der Waschvorrichtung 132 sind die Waschelementhalteteile 70 über Gelenke 134, die Schwenkachsen 136 definieren, schwenkbar an der Welle 40 gelagert. Die Schwenkachsen 136 sind quer und insbesondere senkrecht zur Drehachse 42 ausgerichtet.

Auch bei der Waschvorrichtung 132 ist die Waschelementhalteeinrichtung 50 fliehkraftbetätigbar. Unter Drehung der Welle 40 werden die Waschelementhalteteile 70 relativ zur Welle 40 verschwenkt und ragen radial nach außen maximal über diese hinaus (Figur 23). Bei Auftreten der Gegenkraft 36 können die längenveränderlich ausgestalteten Waschelementhalteteile 70 verkürzt und dadurch der Abstand der festen Enden 48 von der Welle 40 zur Anpassung an die Kontur 56 verringert werden.

Es ist ebenfalls das Verstellelement 118 vorgesehen, das axial verschieblich ist, um die Haltekörper 106 zu verschieben und von der Grundstellung (Figur 22) in die mindestens eine Arbeitsstellung (Figur 23) zu überführen. In der mindestens einen Arbeitsstellung ist der Abstand der festen Enden 48 von der Welle 40 größer als in der Grundstellung.

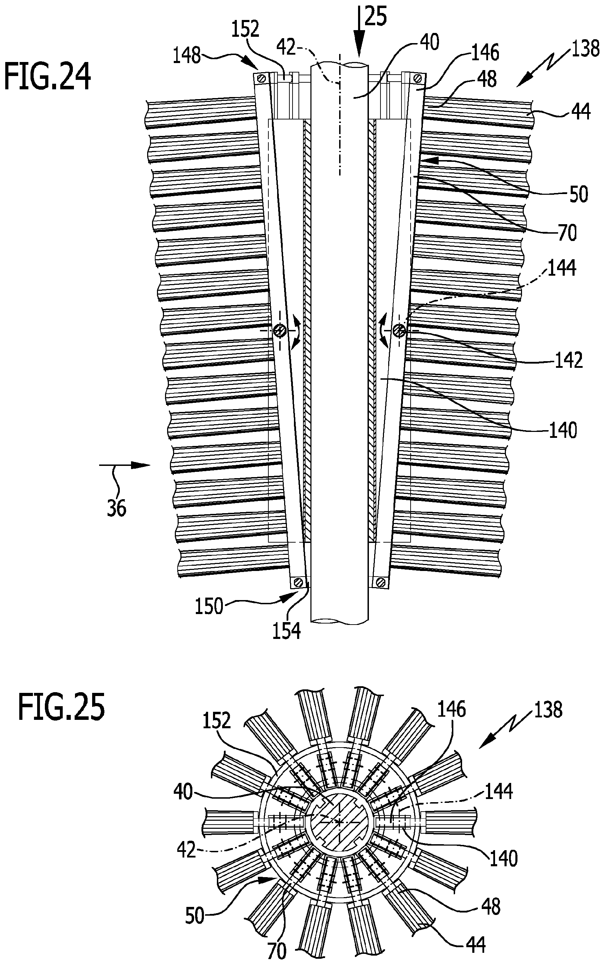

Die Figuren 24 und 25 zeigen eine mit dem Bezugszeichen 138 belegte vorteilhafte Ausführungsform der erfindungsgemäßen Waschvorrichtung.

An der Waschvorrichtung 138 ist die Welle 40 umgebend eine Mehrzahl von Lagerkörpern 140 angeordnet. Die Lagerkörper 140 sind beispielsweise durch Kraft- und/oder Formschluss gesondert oder über ein gemeinsames Halteelement drehfest mit der Welle 40 gekoppelt.

Jedem Waschelementhalteteil 70 ist ein Lagerkörper 140 zugeordnet, und die Lagerkörper 140 und die Waschelementhalteteile 70 sind in Umfangsrichtung die Welle 40 umgebend positioniert, vorzugsweise äquidistant zueinander. Die Lagerkörper 140 und die Waschelementhalteteile 70 sind längs der Welle 40 ausgerichtet.

Die Lagerkörper 140 sind als U-förmige Profile ausgestaltet. Jeder Lagerkörper 140 definiert an einem Gelenk 142 eine Schwenkachse 144. Das Gelenk 142 ist zwischen ersten Enden 148 und zweiten Enden 150 der Schienen 146 angeordnet, vorzugsweise mittig zwischen den Enden 148, 150.

Die Waschelementhalteteile 70 sind als Schienen 146 ausgestaltet. Jede Schiene 146 ist am Gelenk 142 um die Schwenkachse 144 relativ zum Lagerkörper 140 und damit relativ zur Welle 40 schwenkbar. Die Schwenkachse 144 ist quer und insbesondere senkrecht zur Drehachse 42 ausgerichtet. Die Lagerkörper 140 bilden Führungen für die Schienen 146 beim Verschwenken. Die Waschelemente 44 sind radial außenseitig an den Schienen 146 über ihre festen Enden 48 festgelegt.

Durch die Anlenkung der Schienen 146 können diese relativ zu den Lagerkörpern 140 nach Art einer Wippe verschwenken. Die Verschwenkung erfolgt entgegen der Wirkung von elastischen Elementen 152. Vorliegend ist den Schienen 146 ein elastisches Element 152 in Gestalt eines elastisch aufweitbaren Ringes 154 am ersten Ende 148 zugeordnet. Ein weiteres elastisches Element 152, ebenfalls ausgestaltet als elastisch aufweitbarer Ring 154, ist an den zweiten Enden 150 angeordnet. Die Ringe 154 umgeben die Welle 40 und greifen an den Schienen 146 an deren Enden 148, 150 an.

Bei nicht angetriebener Welle 40 und ohne Vorliegen einer Gegenkraft 36 sind die Schienen 146 parallel zur Welle 40 ausgerichtet. Kontaktiert die Waschvorrichtung 138 das Fahrzeug, wird über die Kontur 56 eine Gegenkraft 36 auf die Schienen 146 ausgeübt. Dies ist in Figur 24 im Bereich der unteren Hälfte der Waschvorrichtung 138 der Fall. Die Gegenkraft 36 führt zum Verschwenken der Schienen 146, wobei der Abstand der festen Enden 48 von der Welle 40 an derjenigen axialen Position, an der die Gegenkraft 36 wirkt, verringert wird. Die Schienen 146 verschwenken entgegen der Wirkung des Ringes 154 am ersten Ende 148. Bei Entfallen der Gegenkraft 36 kehren die Schienen 146 unter der Wirkung des Ringes 154 am ersten Ende 148 wieder in die Ausrichtung parallel zur Welle 40 zurück.

In entsprechender Weise werden die Schienen 146 um die Schwenkachsen 144 entgegen der Wirkung des Ringes 154 am zweiten Ende 150 verschwenkt, wenn die Gegenkraft 36 oberhalb der Gelenke 142 auftritt.

Insgesamt sind die Waschelementhalteteile 70 bei der Waschvorrichtung 138 damit so relativ zur Welle 40 beweglich, dass der Abstand der festen Enden 48 der Waschelemente 44 von der Welle 40 abhängig von deren Position axial bezüglich der Drehachse 42 zur Anpassung an die Kontur 56 in unterschiedlichem Ausmaß veränderbar ist.

Die Waschvorrichtung 138 weist durch die schwenkbaren Schienen 146 eine ungefähr schirmförmige oder kegelstumpfförmige Außenkontur auf.

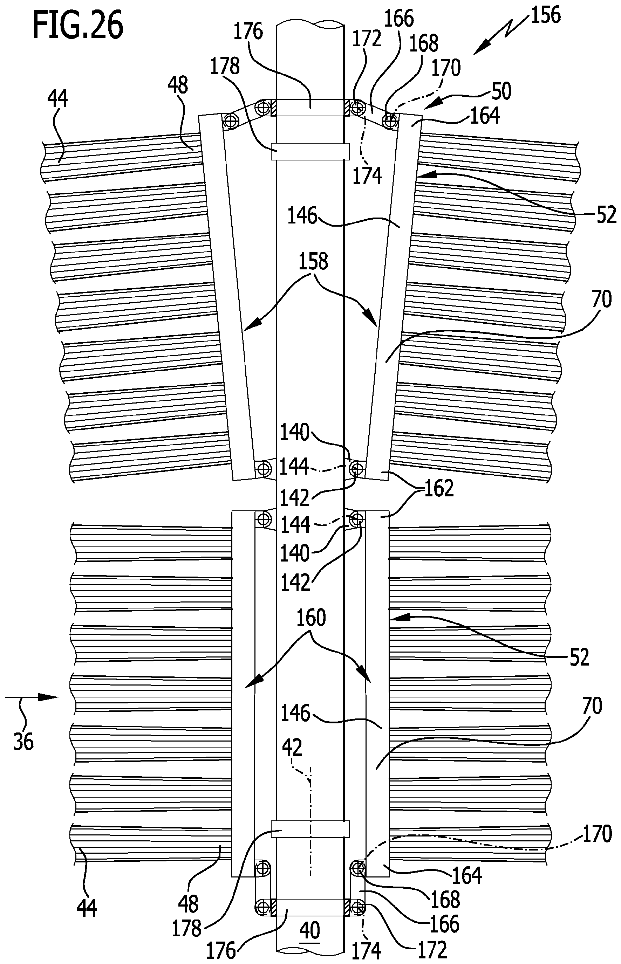

Die Figur 26 zeigt eine mit dem Bezugszeichen 156 belegte vorteilhafte Ausführungsform einer erfindungsgemäßen Waschvorrichtung. Die Funktionsweise der Waschvorrichtung 156 weist gewisse Ähnlichkeiten mit derjenigen der Waschvorrichtung 138 auf. Bei der Waschvorrichtung 156 ist die Waschelementhalteeinrichtung 50 unterteilt in zwei Waschelementhalteeinheiten 52, die axial nebeneinander angeordnet sind. Jede Waschelementhalteeinheit 52 umfasst eine Gruppe 158, 160 von Waschelementhalteteilen 70.

Die Waschelementhalteteile 70 sind als Schienen 146 ausgestaltet und an Lagerkörpern 140 um Schwenkachsen 144 schwenkbar gelagert. Jede Gruppe 158, 160 umfasst eine Mehrzahl von die Welle 40 in Umfangsrichtung umgebenden und vorzugsweise äquidistant zueinander angeordneten Schienen 146. Die Gelenke 142 zur jeweiligen Lagerung der Schienen 146 sind an deren, den Schienen 146 der jeweils anderen Gruppe 158, 160 zugewandten Seiten 162 angeordnet, beispielsweise jeweils endseitig an den Schienen 146.

An den Seiten 164 der Schienen 146, die den Schienen 146 der jeweils anderen Gruppe 158, 160 abgewandt sind, ist jede Schiene 146 mit einem Koppelglied 166 der Waschelementhalteeinrichtung 50 verbunden.

Die Koppelglieder 166 sind über Gelenke 168, definierend Schwenkachsen 170, an den Schienen 146 angelenkt. Die Koppelglieder 166 sind ferner an Gelenken 172, definierend Schwenkachsen 174, an einem Halteglied 176 angelenkt. Das Halteglied 176 ist axial verschieblich an der Welle 40 gehalten. Zum Begrenzen des Verschiebeweges des Haltegliedes 176 relativ zur Welle 40 ist ein jeweiliges Anschlagglied 178 vorgesehen. Das Halteglied 176 ist vorliegend ausgestaltet als konzentrischer Ring, an dem alle Koppelglieder 166 einer Gruppe 158, 160 angreifen.

Im nicht angetriebenen Zustand der Welle 40 können die Schienen 146 parallel zur Welle 40 ausgerichtet sein. Die Waschelementhalteeinrichtung 50 ist fliehkraftbetätigbar, so dass unter Rotation der Welle 40 die Schienen 146 an den Schwenkachsen 144 verschwenken, wobei das Halteglied 176 axial verschoben wird. Bei Auftreten der Gegenkraft 36 erfolgt eine Verschwenkung der Schienen 146 in die Gegenrichtung unter Verringerung der Abstände der festen Enden 48 von der Welle 40 zur Anpassung an die Kontur 56, wobei zugleich das Halteglied 176 in die Gegenrichtung verschoben wird.

Aufgrund der Unterteilung der Waschelementhalteeinrichtung 50 bei der Waschvorrichtung 156 in zwei Waschelementhalteeinheiten 52 ist die Möglichkeit gegeben, dass sich die Schienen 146 jeder der Gruppen 158, 160 unabhängig von den Schienen 146 der jeweils anderen Gruppe 160, 158 relativ zur Welle 40 bewegen und eine bessere Konturanpassung ermöglichen.

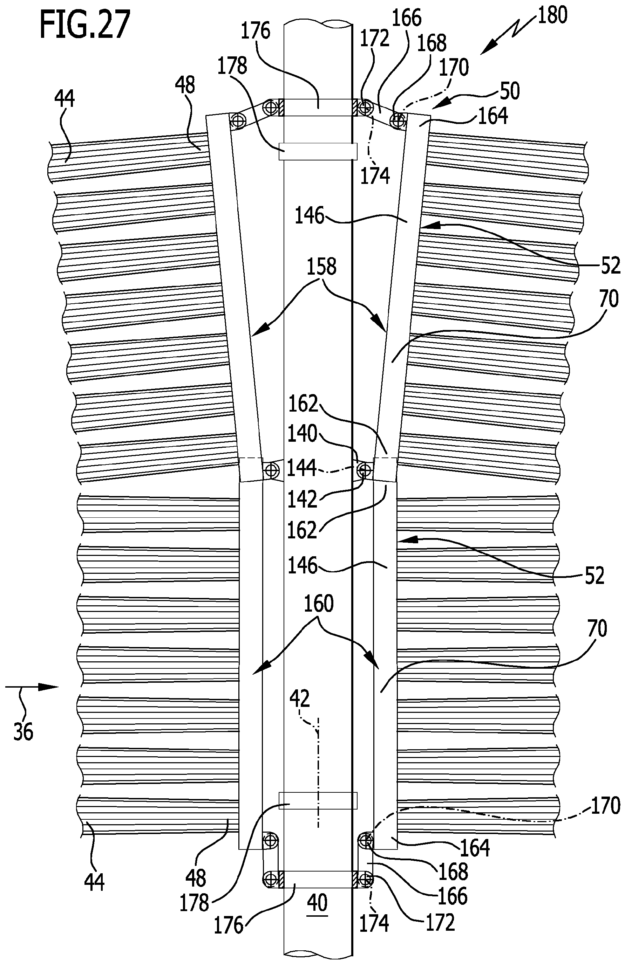

Figur 27 zeigt eine mit dem Bezugszeichen 180 belegte vorteilhafte Ausführungsform einer erfindungsgemäßen Waschvorrichtung. Die Waschvorrichtung 180 stimmt in Konstruktion und Funktion weitgehend mit der Waschvorrichtung 156 überein und unterscheidet sich von dieser im Wesentlichen dadurch, dass an einem jeweiligen Lagerkörper 140 jeweils Schienen 146 der ersten Gruppe 158 und der zweiten Gruppe 160 angelenkt sind. Dies erlaubt es, der Waschvorrichtung 180 eine einfachere Konstruktion zu verleihen. Zudem kann auf einfachere Weise ein Zwischenraum zwischen Waschelementen 44 der ersten Gruppe 158 und Waschelementen 44 der zweiten Gruppe 160 vermieden werden.

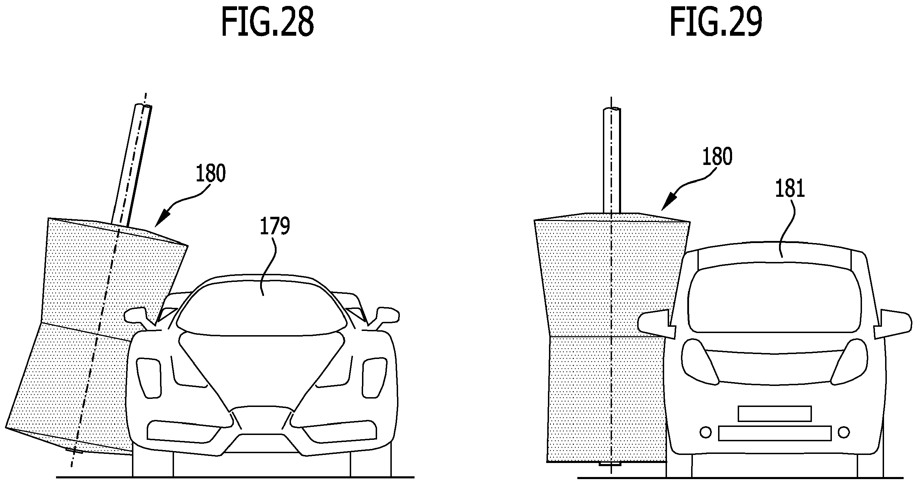

Figur 28 zeigt den Einsatz der Waschvorrichtung 180 zum Waschen eines Sportwagens 179. Die Waschvorrichtung 180 passt sich an die Kontur des Sportwagens 179 an. Aufgrund der eher konkaven Kontur 56 weist die Waschvorrichtung 180 im Bereich der ersten Gruppe 158 und im Bereich der zweiten Gruppe 160 eine jeweils ungefähr kegelstumpfförmige Form auf.

Figur 29 zeigt den Einsatz der Waschvorrichtung 180 zum Waschen eines Kleinbusses oder Hochdachkombis 181, der vorliegend eine eher trapezförmige Kontur aufweist. Hierbei passt sich die Waschvorrichtung 180 an die Kontur 56 so an, dass sie im Bereich der ersten Gruppe 158 eine ungefähr kegelstumpfförmige Gestalt aufweist, im Bereich der zweiten Gruppe 160 eine eher zylindrische Gestalt.

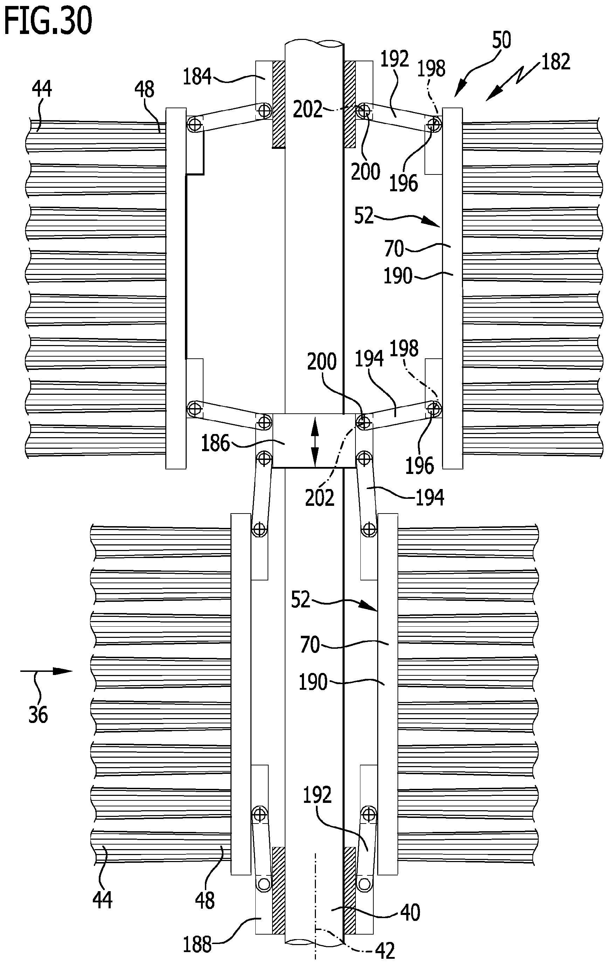

Figur 30 zeigt eine mit dem Bezugszeichen 182 belegte vorteilhafte Ausführungsform der erfindungsgemäßen Waschvorrichtung. Die Waschvorrichtung 182 weist hinsichtlich Aufbau und Funktionsweise Ähnlichkeiten auf mit der Waschvorrichtung 156.

Die Waschelementhalteeinrichtung 50 umfasst drei axial im Abstand zueinander angeordnete Halteglieder 184, 186 und 188. Die Halteglieder 184 und 188 sind unbeweglich an der Welle 40 festgelegt. Das zwischen diesen angeordnete Halteglied 186 ist an der Welle 40 beweglich und insbesondere verschieblich in axialer Richtung gehalten.

Waschelementhalteteile 70, die insbesondere als Schienen 190 ausgestaltet sind, sind jeweils über Koppelglieder 192 mit einem feststehenden Halteglied 184, 188 oder über Koppelglieder 194 mit dem beweglichen Halteglied 186 gekoppelt. Dabei koppeln die Koppelglieder 192, 194 an jeweiligen Gelenken 196, die Schwenkachsen 198 definieren, mit den Schienen 190. Über jeweilige Gelenke 200, die Schwenkachsen 202 definieren, koppeln die Koppelglieder 192, 194 mit den Haltegliedern 184 bis 188. Die Schwenkachsen 198 und 202 sind quer und insbesondere senkrecht zur Drehachse 42 ausgerichtet.

Die Koppelglieder 192, 194 sind günstigerweise endseitig oder an Endabschnitten an den Schienen 190 angelenkt.

Vorzugsweise ist in Umfangsrichtung der Welle 40 jeweils eine Mehrzahl von Schienen 190 mit daran festgelegten Waschelementen 44 vorgesehen, wobei die Schienen 190 günstigerweise äquidistant zueinander angeordnet sind. Wirkt bei der Waschvorrichtung 182 die Gegenkraft 36, in Figur 30 beispielhaft anhand der in der Zeichnung unten dargestellten Schienen 190 gezeigt, verschwenken die Schienen 190 über die Koppelglieder 192, 194, wobei zugleich das Halteglied 186 axial weg von den kraftbeaufschlagten Schienen 190 verschoben wird. Der Abstand der an den kraftbeaufschlagten Schienen 190 festgelegten Waschelemente 44 von der Welle 40 wird verringert zur Anpassung an die Kontur 56 des Fahrzeugs 22. Durch die Verschiebung des Haltegliedes 186 verschwenken auch die jeweils anderen Schienen 190 relativ zu den Koppelgliedern 192, 194, wobei sich der Abstand dieser Schienen 190 von der Welle 40 vergrößert.

Es zeigt sich in der Praxis, dass trotz dieser gekoppelten Bewegung der kraftbeaufschlagten Schienen 190 und der nicht oder in geringerem Ausmaß kraftbeaufschlagten Schienen 190 unter reziproker Abstandsänderung zur Welle 40 dennoch eine gute Anpassung der Waschvorrichtung 182 an unterschiedliche Konturen 56 von Fahrzeugen erfolgen kann.

Bei einer andersartigen, nicht dargestellten weiteren vorteilhaften Ausführungsform, die der Waschvorrichtung 182 ähnelt, kann vorgesehen sein, dass die axial außenseitig angeordneten Halteglieder 184, 188 axial verschieblich ausgestaltet sind und das Halteglied 186 unbeweglich an der Welle 40 festgelegt ist.

### Bezugszeichenliste

- 10: Fahrzeugwaschanlage
- 12: seitliche Träger
- 14: Querträger
- 16: Halteeinrichtung
- 18: Waschvorrichtung
- 20: Karosserie
- 22: Fahrzeug
- 24: Drehachse
- 26: Welle
- 28: Antriebseinrichtung
- 30: Waschelement
- 32: ungereinigte Bereiche
- 34: Anlagekraft
- 36: Gegenkraft
- 38: Waschvorrichtung
- 40: Welle
- 42: Drehachse
- 44: Waschelement
- 46: freies Ende
- 48: festes Ende
- 50: Waschelementhalteeinrichtung
- 52: Waschelementhalteeinheit
- 54: Segment
- 56: Kontur
- 58: Steuereinheit
- 60: Signalleitung
- 62: Steuerleitung
- 64: Grundkörper
- 66: erster Abschnitt
- 68: zweiter Abschnitt
- 70: Waschelementhalteteil
- 72: elastisches Element
- 74: Waschvorrichtung
- 76: Waschvorrichtung
- 78: Waschvorrichtung
- 80: Feder
- 82: Federsteg
- 84: elastisches Material
- 86: Waschvorrichtung
- 88: Schwenkachse
- 90: Waschvorrichtung
- 92: Waschvorrichtung
- 94: Klappen
- 98: Waschvorrichtung
- 100: Waschvorrichtung
- 102: Waschvorrichtung
- 104: Raum
- 106: Haltekörper
- 108: Halteglied
- 110: Schwenkachse
- 112: Stab
- 114: Durchgangsöffnung
- 116: Rand
- 118: Verstellelement
- 120: Waschvorrichtung
- 122: Scheibe
- 124: Stab
- 126: Gelenk
- 128: Schwenkachse
- 130: Halteglied
- 132: Waschvorrichtung
- 134: Gelenk
- 136: Schwenkachse
- 138: Waschvorrichtung
- 140: Lagerkörper
- 142: Gelenk
- 144: Schwenkachse
- 146: Schiene
- 148: erstes Ende
- 150: zweites Ende
- 152: elastisches Element
- 154: Ring
- 156: Waschvorrichtung
- 158: erste Gruppe
- 160: zweite Gruppe
- 162: Seite
- 164: Seite
- 166: Koppelglied
- 168: Gelenk
- 170: Schwenkachse
- 172: Gelenk
- 174: Schwenkachse
- 176: Halteglied
- 178: Anschlagglied
- 179: Sportwagen
- 180: Waschvorrichtung
- 181: Kleinbus/Hochdachkombi
- 182: Waschvorrichtung
- 184: Halteglied
- 186: Halteglied
- 188: Halteglied
- 190: Schiene
- 192: Koppelglied
- 194: Koppelglied
- 196: Gelenk
- 198: Schwenkachse
- 200: Gelenk
- 202: Schwenkachse

## Patentansprüche

1. Waschvorrichtung für eine Fahrzeugwaschanlage, welche Waschvorrichtung eine um eine Drehachse (42) drehend antreibbare Welle (40) sowie mit dieser in Wirkverbindung stehende Waschelemente (44) zum Waschen eines Fahrzeugs (22) umfasst, wobei die Waschvorrichtung (38, 74, 76, 78, 86, 90, 92, 98, 100, 102, 120, 132, 138, 156, 180, 182) eine Waschelementhalteeinrichtung (50) umfasst, die mit der Welle (40) gekoppelt ist und Waschelementhalteteile (70) aufweist, an denen die Waschelemente (44) mit ihren festen Enden (48) gehalten sind, wobei die Waschelementhalteteile (70) relativ zur Welle (40) beweglich ausgebildet sind und bei Kraftbeaufschlagung in Richtung auf die Welle (40) im angetriebenen Zustand der Welle (40) relativ zu dieser bewegt werden zum Verringern des Abstandes der festen Enden (48) der Waschelemente (44) von der Welle (40), und wobei die Waschelementhalteteile (70) längserstreckt ausgestaltet sind und zwei oder mehr Waschelementhalteteile (70) radial außenseitig an der Welle (40) oder an mindestens einem mit dieser drehfest verbundenen Lagerkörper (140) um eine Schwenkachse (144) quer und insbesondere senkrecht zur Drehachse (42) schwenkbar gelagert und die Welle (40) in Umfangsrichtung umgebend angeordnet sind.

2. Waschvorrichtung nach Anspruch 1, **dadurch gekennzeichnet, dass** die Waschelementhalteeinrichtung (50) so ausgebildet ist und die Waschelementhalteteile (70) so relativ zur Welle (40) beweglich sind, dass der Abstand der festen Enden (48) der Waschelemente (44) von der Welle (40) abhängig von deren Position axial bezüglich der Drehachse (42) in unterschiedlichem Ausmaß veränderbar ist.

3. Waschvorrichtung nach Anspruch 1 oder 2, **dadurch gekennzeichnet, dass** die Waschelementhalteeinrichtung (50) axial in zwei oder mehr Waschelementhalteeinheiten (52) mit jeweils mindestens einem Waschelementhalteteil (70) unterteilt ist, wobei das mindestens eine Waschelementhalteteil (70) einer Waschelementhalteeinheit (52) unabhängig vom mindestens einen Waschelementhalteteil (70) einer anderen Waschelementhalteeinheit (52) relativ zur Welle (40) beweglich ist.

4. Waschvorrichtung nach einem der voranstehenden Ansprüche, **dadurch gekennzeichnet, dass** die Waschelementhalteteile (70) längenveränderlich ausgestaltet sind und/oder dass die Waschelementhalteteile (70) flexibel ausgestaltet sind.

5. Waschvorrichtung nach einem der voranstehenden Ansprüche, **dadurch gekennzeichnet, dass** die Waschelementhalteteile (70) als Schienen (146; 190) oder Leisten ausgestaltet sind und der oder die Lagerkörper (140) Führungen ausbilden oder umfassen, in denen die Schienen (146) beim Verschwenken geführt sind.

6. Waschvorrichtung nach einem der voranstehenden Ansprüche, **dadurch gekennzeichnet, dass** die Waschelementhalteeinrichtung (50) mindestens ein elastisches Element (152) umfasst, das an den Waschelementhalteteilen (70) im Abstand zur jeweiligen Schwenkachse (144) angreift und entgegen dessen Wirkung die Waschelementhalteteile (70) um die Schwenkachse (144) schwenkbar sind.

7. Waschvorrichtung nach Anspruch 6, **dadurch gekennzeichnet, dass** das mindestens eine elastische Element (152) ein elastisch aufweitbarer Ring (154) ist, der die Waschelementhalteteile (70) in Umfangsrichtung der Welle (40) miteinander verbindet.

8. Waschvorrichtung nach Anspruch 6 oder 7, **dadurch gekennzeichnet, dass** die jeweilige Schwenkachse (144) zwischen ersten Enden (148) und zweiten Enden (150) der Waschelementhalteteile (70) angeordnet ist und dass zu beiden Seiten der jeweiligen Schwenkachse (144) jeweils mindestens ein elastisches Element (152) angeordnet ist.

9. Waschvorrichtung nach einem der voranstehenden Ansprüche, **dadurch gekennzeichnet, dass** die Waschelementhalteeinrichtung (50) Koppelglieder (166) umfasst, die ein jeweiliges Waschelementhalteteil (70) im Abstand zur Schwenkachse mit der Welle (40) koppeln, wobei das Koppelglied (166) am Waschelementhalteteil (70) angelenkt und schwenkbar mit einem an der Welle (40) axial verschieblich gehaltenen Halteglied (176) verbunden ist.

10. Waschvorrichtung nach Anspruch 9, **dadurch gekennzeichnet, dass** ein gemeinsames Halteglied (176) vorgesehen ist, mit dem die Koppelglieder (166) von zwei oder mehr Waschelementhalteteilen (70) verbunden sind.

11. Waschvorrichtung nach Anspruch 9 oder 10, **dadurch gekennzeichnet, dass** die Waschelementhalteeinrichtung (50) eine erste Gruppe (158) von Waschelementhalteteilen (70) und axial daneben angeordnet eine zweite Gruppe (160) von Waschelementhalteteilen (70) umfasst, wobei die Waschelementhalteteile (70) der ersten Gruppe (158) und der zweiten Gruppe (160) an einander abgewandten Seiten mit den Koppelgliedern (166) verbunden sind und an einander zugewandten Seiten an der Welle (40) oder dem mindestens einen Lagerkörper (140) schwenkbar gelagert sind.

12. Waschvorrichtung nach einem der voranstehenden Ansprüche, **dadurch gekennzeichnet, dass** die Waschelementhalteteile (70) bei nicht angetriebener Welle (40) parallel zur Welle (40) ausgerichtet sind.

13. Waschvorrichtung nach einem der voranstehenden Ansprüche, **dadurch gekennzeichnet, dass** die Waschelemente (44) Waschborsten oder Waschlappen sind und/oder dass die Welle (40) geradlinig ausgestaltet ist.

14. Waschvorrichtung nach einem der voranstehenden Ansprüche, **dadurch gekennzeichnet, dass** die Waschvorrichtung (38, 74, 76, 78, 86, 90, 92, 98, 100, 102, 120, 132, 138, 156, 180, 182) eine Seitenwaschvorrichtung ist oder dass die Waschvorrichtung eine Dachwaschvorrichtung ist.

15. Fahrzeugwaschanlage, umfassend mindestens eine Waschvorrichtung (38, 74, 76, 78, 86, 90, 92, 98, 100, 102, 120, 132, 138, 156, 180, 182) nach einem der voranstehenden Ansprüche.

## Claims

1. Washing apparatus for a vehicle washing installation, which washing apparatus comprises a shaft (40) that is drivable so as to rotate about a rotational axis (42) and washing elements (44) in operative connection with the shaft for washing a vehicle (22), wherein the washing apparatus (38, 74, 76, 78, 86, 90, 92, 98, 100, 102, 120, 132, 138, 156, 180, 182) comprises a washing element holding device (50) that is coupled to the shaft (40) and has washing element holding parts (70) on which the washing elements (44) are held with the fixed ends (48) thereof, wherein the washing element holding parts (70) are configured to be movable relative to the shaft (40) and, upon the application of force in the direction to the shaft (40) in the driven state of the shaft (40), are moved relative to thereto for reducing the distance of the fixed ends (48) of the washing elements (44) from the shaft (40), and wherein the washing element holding parts (70) are of elongate configuration and two or more washing element holding parts (70) are mounted radially outside on the shaft (40) or on at least one bearing body (140) non-rotatably connected to the latter so as to be pivotable about a pivotal axis (144) transversely and in particular perpendicularly to the rotational axis (42) and are arranged surrounding the shaft (40) in circumferential direction.

2. Washing apparatus in accordance with Claim 1, **characterized in that** the washing element holding device (50) is configured in such a way and the washing element holding parts (70) are movable relative to the shaft (40) in such a way that the distance of the fixed ends (48) of the washing elements (44) from the shaft (40) is variable to differing degrees in dependence on the position thereof axially in relation to the rotational axis (42).

3. Washing apparatus in accordance with Claim 1 or 2, **characterized in that** the washing element holding device (50) is subdivided axially into two or more washing element holding units (52), each with at least one washing element holding part (70), wherein the at least one washing element holding part (70) of a washing element holding unit (52) is moveable relative to the shaft independently of the at least one washing element holding part (70) of another washing element holding unit (52).

4. Washing apparatus in accordance with any one of the preceding Claims, **characterized in that** the washing element holding parts (70) are configured to be longitudinally variable and/or **in that** the holding elements (70) are configured to be flexible.

5. Washing apparatus in accordance with any one of the preceding Claims, **characterized in that** the washing element holding parts (70) are configured as rails (146; 190) or strips and the bearing body (140) or bearing bodies (140) form or comprise guides in which the rails (146) are guided when pivoting.

6. Washing apparatus in accordance with any one of the preceding Claims, **characterized in that** the washing element holding device (50) comprises at least one elastic element (152) which engages on the washing element holding parts (70) at a distance from the respective pivotal axis (144) and against the action of which the washing element holding parts (70) are pivotable about the pivotal axis (144).

7. Washing apparatus in accordance with Claim 6, **characterized in that** the at least one elastic element (152) is an elastically expandable ring (154) which connects the washing element holding parts (70) to each other in circumferential direction of the shaft (40).

8. Washing apparatus in accordance with Claim 6 or 7, **characterized in that** the respective pivotal axis (144) is arranged between first ends (148) and second ends (150) of the washing element holding parts (70), and **in that** in each case at least one elastic element (152) is arranged on both sides of the respective pivotal axis (144).

9. Washing apparatus in accordance with any one of the preceding Claims, **characterized in that** the washing element holding device (50) comprises coupling members (166) which couple a respective washing element holding part (70) to the shaft (40) at a distance from the pivotal axis, wherein the coupling member (166) is articulated on the washing element holding part (70) and is pivotably connected to a holding member (176) which is axially displaceably held on the shaft (40).

10. Washing apparatus in accordance with Claim 9, **characterized in that** a common holding member (176) is provided with which the coupling members (166) of two or more washing element holding parts (70) are connected.

11. Washing apparatus in accordance with Claim 9 or 10, **characterized in that** the washing element holding device (50) comprises a first group (158) of washing element holding parts (70) and, arranged axially next thereto, a second group (160) of washing element holding parts (70), wherein the washing element holding parts (70) of the first group (158) and the second group (160) are connected to the coupling members (166) on sides facing away from each other and are pivotably mounted on the shaft (40) or the at least one bearing body (140) on sides facing toward each other.

12. Washing apparatus in accordance with any one of the preceding Claims, **characterized in that** the washing element holding parts (70) are aligned in parallel to the shaft (40) when the shaft (40) is not driven.

13. Washing apparatus in accordance with any one of the preceding Claims, **characterized in that** the washing elements (44) are washing bristles or washing cloths, and/or **in that** the shaft (40) is of rectilinear configuration.

14. Washing apparatus in accordance with any one of the preceding Claims, **characterized in that** the washing apparatus (38, 74, 76, 78, 86, 90, 92, 98, 100, 102, 120, 132, 138, 156, 180, 182) is a side washing apparatus, or **in that** the washing apparatus is a roof washing apparatus.

15. Vehicle washing installation, comprising at least one washing apparatus (38, 74, 76, 78, 86, 90, 92, 98, 100, 102, 120, 132, 138, 156, 180, 182) in accordance with any one of the preceding Claims.

## Revendications

1. Dispositif de lavage pour une installation de lavage de véhicules, ledit dispositif de lavage comprenant un arbre (40) pouvant être entrainé en rotation autour d'un axe de rotation (42), ainsi que des éléments de lavage (44) en liaison d'interaction avec cet arbre, pour laver un véhicule (22), le dispositif de lavage (38, 74, 76, 78, 86, 90, 92, 98, 100, 102, 120, 132, 138, 156, 180, 182) comprenant un système de maintien d'éléments de lavage (50), qui est couplé à l'arbre (40) et comporte des pièces de maintien d'éléments de lavage (70) sur lesquelles sont maintenus les éléments de lavage (44) avec leurs extrémités fixes (48), dispositif de lavage
dans lequel les pièces de maintien d'éléments de lavage (70) sont réalisées de manière à être mobiles par rapport à l'arbre (40), et sont, dans le cas d'une sollicitation par une force en direction de l'arbre (40), dans l'état entrainé de l'arbre (40), déplacées par rapport à celui-ci pour réduire la distance des extrémités fixes (48) des éléments de lavage (44) à l'arbre (40),
et dans lequel les pièces de maintien d'éléments de lavage (70) sont d'une configuration allongée dans la direction longitudinale, et deux pièces de maintien d'éléments de lavage (70) ou davantage sont montées sur le côté radialement à l'extérieur de l'arbre (40) ou sur au moins un corps de palier (140) relié à celui-ci de manière fixe en rotation, en pouvant pivoter autour d'un axe de pivotement (144), transversalement et notamment perpendiculairement à l'axe de rotation (42), et sont agencées de manière à entourer l'arbre (40) dans la direction périphérique.

2. Dispositif de lavage selon la revendication 1, **caractérisé en ce que** le système de maintien d'éléments de lavage (50) est conçu de manière telle, et les pièces de maintien d'éléments de lavage (70) sont mobiles par rapport à l'arbre (40) de manière telle, qu'il soit possible de faire varier la distance d'espacement des extrémités fixes (48) des éléments de lavage (44) à l'arbre (40), selon une amplitude différente en fonction de leur position axiale relativement à l'axe de rotation (42).

3. Dispositif de lavage selon la revendication 1 ou la revendication 2, **caractérisé en ce que** le système de maintien d'éléments de lavage (50) est subdivisé axialement en deux unités de maintien d'éléments de lavage (52) ou davantage avec chacune respectivement au moins une pièce de maintien d'éléments de lavage (70), ladite au moins une pièce de maintien d'éléments de lavage (70) d'une unité de maintien d'éléments de lavage (52) étant mobile par rapport à l'arbre (40), indépendamment de ladite au moins une pièce de maintien d'éléments de lavage (70) d'une autre unité de maintien d'éléments de lavage (52).

4. Dispositif de lavage selon l'une des revendications précédentes, **caractérisé en ce que** les pièces de maintien d'éléments de lavage (70) sont d'une configuration de longueur variable, et/ou **en ce que** les pièces de maintien d'éléments de lavage (70) sont d'une configuration les rendant flexibles.

5. Dispositif de lavage selon l'une des revendications précédentes, **caractérisé en ce que** les pièces de maintien d'éléments de lavage (70) sont réalisées sous la forme de rails (146 ; 190) ou de barres, et le ou les corps de palier (140) forment ou comportent des guidages dans lesquels sont guidés les rails (146) lors du pivotement.

6. Dispositif de lavage selon l'une des revendications précédentes, **caractérisé en ce que** le système de maintien d'éléments de lavage (50) comprend au moins un élément élastique (152), qui agit sur les pièces de maintien d'éléments de lavage (70) à distance de l'axe de pivotement (144) respectivement correspondant, et à l'encontre de l'action duquel il est possible de faire pivoter les pièces de maintien d'éléments de lavage (70), autour de l'axe de pivotement (144).

7. Dispositif de lavage selon la revendication 6, **caractérisé en ce que** ledit au moins un élément élastique (152) est un anneau (154) pouvant être évasé de manière élastique, qui relie mutuellement les pièces de maintien d'éléments de lavage (70) dans la direction périphérique de l'arbre (40).

8. Dispositif de lavage selon la revendication 6 ou la revendication 7, **caractérisé en ce que** l'axe de pivotement (144) respectif est agencé entre des premières extrémités (148) et des deuxièmes extrémités (150) des pièces de maintien d'éléments de lavage (70), et **en ce que** des deux côtés de l'axe de pivotement (144) respectif, est agencé respectivement au moins un élément élastique (152).

9. Dispositif de lavage selon l'une des revendications précédentes, **caractérisé en ce que** le système de maintien d'éléments de lavage (50) comprend des organes de couplage (166), qui assurent le couplage d'une pièce de maintien d'éléments de lavage (70) respective avec l'arbre (40), à distance de l'axe de pivotement, l'organe de couplage (166) étant articulé à la pièce de maintien d'éléments de lavage (70), et relié à un organe de maintien (176) maintenu de manière axialement coulissante sur l'arbre (40).

10. Dispositif de lavage selon la revendication 9, **caractérisé en ce qu'**il est prévu un organe de maintien (176) commun, auquel sont reliés les organes de couplage (166) de deux pièces de maintien d'éléments de lavage (70) ou davantage.

11. Dispositif de lavage selon la revendication 9 ou la revendication 10, **caractérisé en ce que** le système de maintien d'éléments de lavage (50) comprend un premier groupe (158) de pièces de maintien d'éléments de lavage (70), et, agencé axialement à côté, un deuxième groupe (160) de pièces de maintien d'éléments de lavage (70), les pièces de maintien d'éléments de lavage (70) du premier groupe (158) et du deuxième groupe (160) étant, sur des côtés opposés éloignés, reliées aux organes de couplage (166), et sur des côtés dirigés l'un vers l'autre, montées pivotantes sur l'arbre (40) ou sur ledit au moins un corps de palier (140).

12. Dispositif de lavage selon l'une des revendications précédentes, **caractérisé en ce que** les pièces de maintien d'éléments de lavage (70) sont, lorsque l'arbre (40) n'est pas entrainé, orientées parallèlement à l'arbre (40).

13. Dispositif de lavage selon l'une des revendications précédentes, **caractérisé en ce que** les éléments de lavage (44) sont des poils de brosse de lavage ou des bandelettes de lavage, et/ou **en ce que** l'arbre (40) est d'une configuration rectiligne.

14. Dispositif de lavage selon l'une des revendications précédentes, **caractérisé en ce que** le dispositif de lavage (38, 74, 76, 78, 86, 90, 92, 98, 100, 102, 120, 132, 138, 156, 180, 182) est un dispositif de lavage latéral, ou **en ce que** le dispositif de lavage est un dispositif de lavage de toit.

15. Installation de lavage de véhicules, comprenant au moins un dispositif de lavage (38, 74, 76, 78, 86, 90, 92, 98, 100, 102, 120, 132, 138, 156, 180, 182) selon l'une des revendications précédentes.
